(19) Europäisches Patentamt
European Patent Office
Office européen des brevets

(11) EP 4 091 724 B1

(12) **EUROPEAN PATENT SPECIFICATION**

(45) Date of publication and mention of the grant of the patent:
**12.02.2025 Bulletin 2025/07**

(21) Application number: **22169391.4**

(22) Date of filing: **22.04.2022**

(51) International Patent Classification (IPC):
***B05D 5/04*** (2006.01) ***B41J 2/21*** (2006.01)
***B41J 2/165*** (2006.01) ***C09D 11/102*** (2014.01)
***C09D 11/38*** (2014.01) ***B05B 15/50*** (2018.01)
***B05D 1/26*** (2006.01) ***B05D 3/02*** (2006.01)
***B05D 3/04*** (2006.01) ***B05D 7/04*** (2006.01)

(52) Cooperative Patent Classification (CPC):
**B41J 2/2114; B05B 15/50; B05D 1/26; B05D 3/0218; B41J 2/16535; C09D 11/102; C09D 11/38;** B05D 3/0413; B05D 7/04; B05D 2252/02; B05D 2503/00; B41J 2002/1655

(54) **DISCHARGE APPARATUS, WIPING MEMBER, AND PRINTING METHOD**

AUSSTOSSVORRICHTUNG, WISCHELEMENT UND DRUCKVERFAHREN

APPAREIL DE DÉCHARGE; ÉLÉMENT D'ESSUYAGE; ET PROCÉDÉ D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2021 JP 2021083403**

(43) Date of publication of application:
**23.11.2022 Bulletin 2022/47**

(73) Proprietor: **Ricoh Company, Ltd.**
**Tokyo 143-8555 (JP)**

(72) Inventors:
- **Masuda, Kiminori**
**Tokyo, 143-8555 (JP)**
- **Takahashi, Hiroaki**
**Tokyo, 143-8555 (JP)**
- **Yoshihara, Mayumi**
**Tokyo, 143-8555 (JP)**

(74) Representative: **Marks & Clerk LLP**
**15 Fetter Lane**
**London EC4A 1BW (GB)**

(56) References cited:
**JP-A- 2002 210 940** **JP-A- 2009 160 867**
**JP-A- 2015 183 112** **JP-A- 2018 039 946**
**US-A1- 2015 259 553** **US-A1- 2018 224 783**
**US-A1- 2018 257 104** **US-A1- 2021 016 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

Technical Field

The present invention relates to a discharge apparatus as defined by independent claim 1, and a printing method as defined by independent claim 13.

Description of the Related Art

Impermeable print media such as plastic films are used for commercial applications such as advertisement and signage and packaging materials for foods, beverages, and daily necessities in order to improve durabilities such as light resistance, water resistance, and wear resistance. Various inks to be used on such impermeable print media have been developed.

As such inks, for example, solvent-based inks using an organic solvent as a solvent and ultraviolet-ray-curable inks containing a polymerizable monomer as a main component are widely used. However, solvent-based inks are feared to be environmentally hazardous through evaporation of the organic solvent, and ultraviolet-ray-curable inks may be limited in the options of polymerizable monomers to be used in terms of safety.

Hence, ink sets including water-based inks that have a low environmental impact and can be directly printed over impermeable print media have been proposed.

Problems of such water-based inks that can be directly printed over impermeable print media include scratch resistance, and methods for improving scratch resistance have been proposed.

For example, a disclosed water-based ink contains water, a water-soluble organic solvent, pigment-containing vinyl polymer particles, and polycarbonate-based urethane resin particles, wherein the water-soluble organic solvent contains only a water-soluble organic solvent having a boiling point of 250 degrees Celsius or lower (see, for example, JP-2015-147919-A).

A disclosed method forms a water-based latex ink protective layer over a dried water-based latex color image layer, using a water-based latex ink containing water or a hydrophilic organic solvent and a resin, the resin being emulsified or suspended in the water or the hydrophilic organic solvent (see, for example, JP-2013-212644-A).

JP-A-2002 210940 discloses an inkjet recording medium including as an uppermost surface layer, an ink receiving layer of a porous material layer having two components as essential components of a water-dispersed resin A of which at least the lowest film-forming temperature is not less than 50 deg.C and a water-dispersed resin B of which the lowest film-forming temperature is not less than 0 deg.C.

JP-A-2015 183112 discloses an inkjet ink set used for an ink low-absorptive or nonabsorptive recording medium, which comprises: an ink composition containing water and a color material; a first clear ink composition which contains first resin particles having a glass transition temperature of 50°C or more and substantially contains no color material; and a second clear ink composition which contains second resin particles having a glass transition temperature of less than 50°C and substantially contains no color material.

JP-2009-160867-A discloses to provide a surface coating liquid which can improve the scratch resistance of a recorded article without spoiling the texture of a recording medium or the picture quality of an image being recorded with a pigment ink, and to provide an inkjet recording method and an inkjet recording apparatus which enables superior image formation. A surface coating liquid is applied to a region which includes at least an image formed on the recording medium by using a pigment ink containing a pigment. The surface coating liquid contains at least a resin A which forms a resin layer on the surface of a pigment layer, and a resin B which is fixed by penetrating into pores of the pigment layer.

SUMMARY

The present invention has an object to provide a discharge apparatus having excellent discharge reliability also when allowed to discharge a clear ink having excellent scratch resistance.

The invention provides a discharge apparatus and a method as set out in the appended claims.

The present invention can provide a discharge apparatus having excellent discharge reliability also when allowed to discharge a clear ink having excellent scratch resistance.

BRIEF DESCRIPTION OF THE SEVERAL VIEWS OF THE DRAWINGS

A more complete appreciation of the invention and many of the attendant advantages and features thereof can be readily obtained and understood from the following detailed description with reference to the accompanying drawings, wherein:

FIG. 1 is a schematic perspective view of a discharge apparatus of the present disclosure;
FIG. 2 is a schematic perspective view of a main tank of the present disclosure;
FIG. 3 is a schematic diagram illustrating the interior of a main body of an inkjet printing apparatus of the present disclosure;
FIG. 4 is a schematic view of a liquid discharge apparatus including a wiping member according to the present disclosure;
FIG. 5 is a schematic diagram illustrating the structure of a nozzle plate to be wiped with a wiping member according to the present disclosure;
FIG. 6 is a schematic diagram illustrating the structure of a cleaning section of an image forming apparatus according to the present disclosure; and
FIG. 7 is a schematic diagram illustrating the cross-section of a wiping member according to the present disclosure in the form of a sheet.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.
In describing embodiments illustrated in the drawings, specific terminology is employed for the sake of clarity.

(Discharge apparatus and printing method)

According to the invention, a discharge apparatus according to claim 1, and a printing method according to claim 13 are disclosed.

<Wiping member>

The wiping member of the present disclosure is preferably in the following conditions:

· the wiping member includes two or more layers including a first layer that comes into contact with the nozzle-formed surface;
· $t1<t2$ is established, where t1 denotes a thickness of the first layer, and t2 denotes a total thicknesses of the two or more layers excluding the first layer; and
· the porosity of the first layer is less than the porosity of at least one layer of the two or more layers excluding the first layer.

<Ink accommodating unit>

The ink accommodating unit accommodates, for example, an ink that is a liquid.
The ink accommodating unit is not particularly limited as long as it is a member that can accommodate an ink. Examples of the ink accommodating unit include, but are not limited to, an ink accommodating container and an ink tank.
The ink accommodating container accommodates the ink in the container and further includes other members that are appropriately selected as needed.
The container is not particularly limited, and the shape, structure, size, material, etc. thereof are appropriately selected depending on the intended purpose. Examples of the container include, but are not limited to, a container including at least an ink bag formed of, for example, an aluminum laminate film and a resin film.
Examples of the ink tank include, but are not limited to, a main tank and a sub tank.

<Discharge head>

The discharge head is configured to discharge a clear ink to a print target, to form a print layer.
The discharge head of the present embodiment includes, for example, an individual liquid chamber in communication with the nozzle through which the liquid is discharged, a nozzle plate, and a stimulus generating unit. The nozzle through which the liquid is discharged is formed in the nozzle plate. The nozzle plate preferably includes a nozzle

substrate and an ink repellent film disposed on the nozzle substrate.

The individual liquid chamber is disposed to correspond to each of a plurality of nozzle holes disposed in the nozzle plate. The individual liquid chambers are a plurality of individual flow channels in communication with the nozzle holes. The individual liquid chamber may be also referred to as, for example, a pressurizing chamber, an ink flow channel, a pressurizing liquid chamber, a pressure chamber, a discharge chamber, or a liquid chamber.

The stimulus generating unit is a unit configured to generate stimulus to be applied to an ink.

The stimulus generated by the stimulus generating unit is not particularly limited and may be appropriately selected depending on the intended purpose. Examples of the stimulus include, but are not limited to, heat (temperature), pressure, vibration, and light. These stimuli may be used alone or in combination. Of these stimuli, heat and pressure are suitable.

Examples of the stimulus generating unit include, but are not limited to, a heating device, a pressurizing device, a piezoelectric element, a vibration generating device, an ultrasonic oscillator, and a light source. Specific examples of the stimulus generating unit include, but are not limited to: piezoelectric actuators such as piezoelectric elements; thermal actuators each utilizing a phase change caused by film boiling of an ink using an electrothermal energy conversion element such as a heat resistor; shape-memory alloy actuators each utilizing a metal phase change due to a temperature change; and electrostatic actuators each utilizing an electrostatic force.

In the case where the stimulus is "heat," thermal energy corresponding to a printing signal is applied to an ink inside the ink discharge head, for example, by means of a thermal head. Examples thereof include, but are not limited to, a method where bubbles are formed in the ink by the thermal energy, and the ink is discharged as droplets from the nozzle holes of the nozzle plate by the pressure of the bubbles.

In the case where the stimulus is "pressure," the piezoelectric element is bent by applying voltage to the piezoelectric element bonded to a position which is called the pressure chamber in an ink flow channel in the ink discharge head. As a result, a volume of the pressure chamber is contracted to discharge the ink as droplets from the nozzle holes of the ink discharge head.

In particular, a piezo system where an ink is discharged by applying voltage to a piezoelectric element is preferable.

<Heating unit>

The heating unit is configured to heat a print target.

The heating unit includes a unit configured to heat and dry a print surface and back surface of a print medium as a print target. Examples of the heating unit include, but are not limited to, an infrared ray heater, a hot air heater, and a heat roller. These heating units may be used alone or in combination.

A method for heating the print medium as the print target is not particularly limited and may be appropriately selected depending on the intended purpose. Examples of the method include, but are not limited to: a method where the print medium to which the ink has been deposited is brought into contact with a heated fluid such as hot air as a drying unit; a method where the print medium to which the ink has been deposited is brought into contact with a heating member, followed by heating through heat transfer; and a method where the print medium to which the ink has been deposited is heated by irradiation of energy rays such as infrared rays and far infrared rays.

In the heating step, when to perform heating can be appropriately changed among before printing, during printing, and after printing. By performing heating before or during printing, the liquid can be applied onto the heated print medium. By performing heating after printing, a printed matter can be dried.

The heating duration is not particularly limited as long as a surface temperature of the print medium can be controlled to a desired temperature, and may be appropriately selected depending on the intended purpose. The heating duration is preferably controlled by controlling a transferring speed of the print medium as the print target.

The heating temperature is not particularly limited and may be appropriately selected depending on the intended purpose. A preferable temperature is as described above.

The heating temperature may be different among before printing, during printing, and after printing.

<Clear ink>

The clear ink used as the liquid according to the invention is based on the following finding. Specifically, although existing inks are improved in scratch resistance, sufficient scratch resistance sometimes cannot be ensured for various hazards in actual use.

The inventors of the present invention conducted intensive studies on a clear ink capable of forming a coating film having high scratch resistance and have conceived the present invention. Specifically, the inventors of the present invention have found that a coating film having high scratch resistance can be formed by a clear ink including resin particles and water, where a volume average particle diameter of the resin particles is 50 nm or less, the resin particles include resin

particles A and resin particles B, and the resin particles A have a glass transition temperature of 50 degrees Celsius or higher and the resin particles B have a glass transition temperature of lower than 0 degrees Celsius, and a dried film of the clear ink has glass transition temperatures (Tg) at 50 degrees Celsius or higher and at lower than 0 degrees Celsius.

The clear ink means a colorless, transparent ink that includes resin particles and water and is substantially free of a colorant.

The clear ink is, according to the invention, a water-based clear ink. The water-based clear ink means a clear ink containing water as a solvent. The water-based clear ink may contain an organic solvent as needed.

The clear ink contains at least resin particles and water, preferably contains a surfactant, and further contains other components as needed.

-Resin particles-

The kind of the resin of the resin particles is not particularly limited and may be appropriately selected depending on the intended purpose. Examples of the resin include, but are not limited to, polyurethane resins, polyester resins, acrylic resins, vinyl acetate-based resins, styrene resins, butadiene resins, styrene-butadiene resins, vinyl chloride resins, acrylicstyrene resins, and acrylic-silicone resins.

In production of the ink, the resin is added in the form of resin particles made of the resin. The resin particles may be added in the ink in the form of a resin emulsion dispersed in water serving as a dispersion medium. As the resin particles, an appropriately synthesized product may be used or a commercially available product may be used. These kinds of resin particles may be used alone or in combination.

The volume average particle diameter of the resin particles is 50 nm or less, and preferably 5 nm or greater but 40 nm or less. When the volume average particle diameter of the resin particles is 50 nm or less, a uniform clear ink coating film can be formed. Also, the clear ink having been discharged to the print target is increased in scratch resistance.

The volume average particle diameter of the resin particles can be measured with, for example, a particle size analyzer (NANOTRAC WAVE II, available from MicrotracBEL Corporation).

A dried film of the clear ink has glass transition temperatures (Tg) at 50 degrees Celsius or higher and at lower than 0 degrees Celsius, preferably at 50 degrees Celsius or higher but lower than 100 degrees Celsius and at -50 degrees Celsius or higher but lower than 0 degrees Celsius. When a dried film of the clear ink has Tg at 50 degrees Celsius or higher and at lower than 0 degrees Celsius, a clear ink coating film has a better scratch resistance.

The resin particles contain at least two kinds of resin particles, namely resin particles A and resin particles B.

The glass transition temperature (Tg) of the resin particles A is 50 degrees Celsius or higher and preferably 50 degrees Celsius or higher but lower than 100 degrees Celsius. The resin particles A having the Tg of 50 degrees Celsius or higher provides a stiff coating film of the clear ink having increased scratch resistance.

The glass transition temperature (Tg) of the resin particles B is lower than 0 degrees Celsius and preferably -50 degrees Celsius or higher but lower than 0 degrees Celsius. The resin particles B having the Tg of lower than 0 degrees Celsius increases close adhesiveness between the clear ink and the underlying layer to increase scratch resistance of a coating film of the clear ink.

In terms of satisfying both of scratch resistance and close adhesiveness at the same time, a mass ratio MA:MB between the mass MA of the resin particles A and the mass MB of the resin particles B is preferably from 98:2 through 80:20. It is preferable that the resin particles A having Tg at 50 degrees Celsius or higher be contained in a greater amount. More preferably, the resin particles A are polyurethane resin particles.

The Tg of a dried film of the clear ink and the resin particles can be measured with, for example, differential scanning calorimeters (TA-60WS and DSC-60, available from Shimadzu Corporation).

When the resin particles are polyurethane resin particles, an ink coating film formed with the clear ink has stiffness. This makes it easier to suppress internal breakage of the coating film and consequent partial peeling of the coating film, or change of the surface condition of the coating film and consequent change of the hue of a rubbed portion, which is preferable.

Examples of the polyurethane resin include, but are not limited to, polyether-based polyurethane resins, polycarbonate-based polyurethane resins, and polyester-based polyurethane resins.

The polyurethane resin is not particularly limited and may be appropriately selected depending on the intended purpose. Examples of the polyurethane resin include, but are not limited to, polyurethane resins obtained by allowing polyol to undergo reaction with polyisocyanate.

Examples of the polyol include, but are not limited to, polyether polyol, polycarbonate polyol, and polyester polyol. These polyols may be used alone or in combination.

Examples of the polyether polyol include, but are not limited to, a product obtained by allowing alkylene oxide to undergo addition polymerization with a starting material, which is at least one selected from compounds containing two or more active hydrogen atoms.

Examples of the compounds containing two or more active hydrogen atoms include, but are not limited to,

ethylene glycol, diethylene glycol, triethylene glycol, propylene glycol, trimethylene glycol, 1,3-butanediol, 1,4-butanediol, 1,6-hexanediol, glycerin, trimethylolethane, and trimethylolpropane. These compounds may be used alone or in combination.

Examples of the alkylene oxide include, but are not limited to, ethylene oxide, propylene oxide, butylene oxide, styrene oxide, epichlorohydrin, and tetrahydrofuran. These alkylene oxides may be used alone or in combination.

The polyether polyol is not particularly limited and may be appropriately selected depending on the intended purpose. Polyoxytetramethylene glycol and polyoxypropylene glycol are preferable in terms of obtaining a binder for an ink capable of imparting an exceptional scratch resistance. These polyether polyols may be used alone or in combination.

Examples of the polycarbonate polyol that can be used for producing the polyurethane resin include, but are not limited to, products obtained by allowing carbonic acid ester to undergo reaction with polyol, and products obtained by allowing phosgene to undergo reaction with, for example, bisphenol A. These polycarbonate polyols may be used alone or in combination.

Examples of the carbonic acid ester include, but are not limited to, methyl carbonate, dimethyl carbonate, ethyl carbonate, diethyl carbonate, cyclocarbonate, and diphenyl carbonate. These carbonic acid esters may be used alone or in combination.

Examples of the polyol include, but are not limited to: dihydroxy compounds having a relatively low molecular weight such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 1,4-cyclohexanediol, 1,4-cyclohexanedimethanol, hydroquinone, resorcin, bisphenol A, bisphenol-F, and 4,4'-biphenol; and polyether polyols such as polyethylene glycol, polypropylene glycol, and polyoxytetramethylene glycol; and polyester polyols such as polyhexamethylene adipate, polyhexamethylene succinate, and polycaprolactone. These polyols may be used alone or in combination.

Examples of the polyester polyol include, but are not limited to, products obtained by allowing polyol having a low molecular weight to undergo esterification reaction with polycarboxylic acid, polyesters obtained by allowing a cyclic ester compound such as ε-caprolactone to undergo ring-opening polymerization reaction, and copolyester of these polyesters. These polyester polyols may be used alone or in combination.

Examples of the polyol having a low molecular weight include, but are not limited to, ethylene glycol and propylene glycol. These polyols may be used alone or in combination.

Examples of the polycarboxylic acid include, but are not limited to, succinic acid, adipic acid, sebacic acid, dodecanedicarboxylic acid, terephthalic acid, isophthalic acid, phthalic acid, and anhydrides or ester-forming derivatives of these polycarboxylic acids. These polycarboxylic acids may be used alone or in combination.

Examples of the polyisocyanate include, but are not limited to: aromatic diisocyanates such as phenylene diisocyanate, tolylene diisocyanate, diphenylmethane diisocyanate, and naphthalene diisocyanate; aliphatic or alicyclic diisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, 2,2,4-trimethylhexamethylene diisocyanate. These polyisocyanates may be used alone or in combination. Of these polyisocyanates, alicyclic diisocyanates are preferable in terms of weather resistance.

Additional use of at least one kind of an alicyclic diisocyanate makes it easier to obtain an intended coating film strength and an intended scratch resistance.

Examples of the alicyclic diisocyanate include, but are not limited to, isophorone diisocyanate and dicyclohexylmethane diisocyanate.

The proportion of the alicyclic diisocyanate is preferably 60% by mass or greater relative to the total amount of the isocyanate compound.

[Method for producing polyurethane resin]

The method for producing the polyurethane resin is not particularly limited. The polyurethane resin can be obtained by producing methods that have been hitherto commonly used. Examples of the producing method include, but are not limited to, the following methods.

First, in the absence of a solvent or in the presence of an organic solvent, the polyol and the polyisocyanate are allowed to undergo reaction at an equivalent ratio at which isocyanate groups will be excessive, to produce an isocyanate-terminated urethane prepolymer.

Next, anionic groups in the isocyanate-terminated urethane prepolymer are neutralized with a neutralizer as needed, and subsequently allowed to undergo reaction with a chain extender. Finally, the organic solvent in the system is removed as needed. **In** this way, the polyurethane resin can be obtained.

Examples of the organic solvent that can be used for producing the polyurethane resin include, but are not limited to: ketones such as acetone, and methyl ethyl ketone; ethers such as tetrahydrofuran, and dioxane; acetic acid esters such

as ethyl acetate and butyl acetate; nitriles such as acetonitrile; and amides such as dimethylformamide, N-methyl pyrrolidone, and N-ethyl pyrrolidone. These organic solvents may be used alone or in combination.

Examples of the chain extender include, but are not limited to, polyamines and other active hydrogen group-containing compounds.

Examples of the polyamine include, but are not limited to: diamines such as ethylene diamine, 1,2-propane diamine, 1,6-hexamethylene diamine, piperazine, 2,5-dimethyl piperazine, isophorone diamine, 4,4'-dicyclohexylmethane diamine, and 1,4-cyclohexane diamine; polyamines such as diethylene triamine, dipropylene triamine, and triethylene tetramine; hydrazines such as hydrazine, N,N'-dimethyl hydrazine, and 1,6-hexamethylene bishydrazine; dihydrazides such as succinic acid dihydrazide, adipic acid dihydrazide, glutaric acid dihydrazide, sebacic acid dihydrazide, and isophthalic acid dihydrazide. These polyamines may be used alone or in combination.

Examples of the other active hydrogen group-containing compounds include, but are not limited to: glycols such as ethylene glycol, diethylene glycol, triethylene glycol, propylene glycol, 1,3-propanediol, 1,3-butanediol 1,4-butanediol, hexamethylene glycol, saccharose, methylene glycol, glycerin, and sorbitol; phenols such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water. These other active hydrogen group-containing compounds may be used alone or in combination as long as storage stability of the ink is not degraded.

Polycarbonate-based polyurethane resins are preferable as the polyurethane resin in terms of water resistance, heat resistance, wear resistance, weather resistance, and image scratch resistance based on a high cohesive force of carbonate groups. With the polycarbonate-based polyurethane resins, an ink suitable for printed matters to be used under severe conditions such as outdoors can be obtained.

A commercially available product may be used as the polyurethane resin. Examples of the commercially available product include, but are not limited to, UCOAT UX-485 (polycarbonate-based polyurethane resin), UCOAT UWS-145 (polyester-based polyurethane resin), PERMARINE UA-368T (polycarbonate-based polyurethane resin), and PERMARINE UA-200 (polyether-based polyurethane resin) (all available from Sanyo Chemical Industries, Ltd.). These commercially available products may be used alone or in combination.

The proportion of the resin particles in the clear ink is preferably 8% by mass or greater, more preferably 10% by mass or greater, and in terms of excellent scratch resistance and excellent ink discharging stability, more preferably 10% by mass or greater but 25% by mass or less. When the total proportion of the resin particles is 10% by mass or greater, scratch resistance is better improved.

-Water-

The water is not particularly limited and may be appropriately selected depending on the intended purpose. Examples of the water include, but are not limited to, pure water such as ion-exchanged water, ultrafiltrated water, reverse osmotic water, and distilled water, and ultrapure water. These kinds of water may be used alone or in combination

The proportion of the water in the clear ink is preferably 15% by mass or greater but 60% by mass or less. When the proportion of the water is 15% by mass or greater, thickening to a high viscosity can be prevented and discharging stability can be improved. On the other hand, when the proportion of the water is 60% by mass or less, a good wettability over impermeable print media can be obtained and image quality can be improved.

-Surfactant-

When the surfactant is added in the clear ink, the surface tension of the ink is reduced, and the ink permeates print media such as paper quickly after ink droplets land on the print media. Therefore, feathering and color bleed can be reduced.

Surfactants are classified into nonionic, anionic, and amphoteric surfactants depending on the polarity of the hydrophilic group.

Surfactants are classified into fluorine-based, silicone-based, and acetylene-based surfactants depending on the structure of the hydrophobic group.

In the present disclosure, fluorine-based surfactants are mainly used. However, silicone-based surfactants and acetylene-based surfactants may be used in combination.

As the surfactant, any of silicone-based surfactants, fluorine-based surfactants, amphoteric surfactants, nonionic surfactants, and anionic surfactants may be used.

The silicone-based surfactant has no specific limit and can be suitably selected to suit to a particular application. Of these silicone-based surfactants, preferred are silicone-based surfactants which are not decomposed even in a high pH environment. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene

group as a modifying group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl siloxane.

The polyether-modified silicone-based surfactant has no particular limit and can be suitably selected to suit to a particular application. Examples thereof include, but are not limited to, a compound in which the polyalkylene oxide structure represented by the following General formula (S-1) is introduced into the side chain of the Si site of dimethyl polysiloxane.

[General Formula (S-1)]

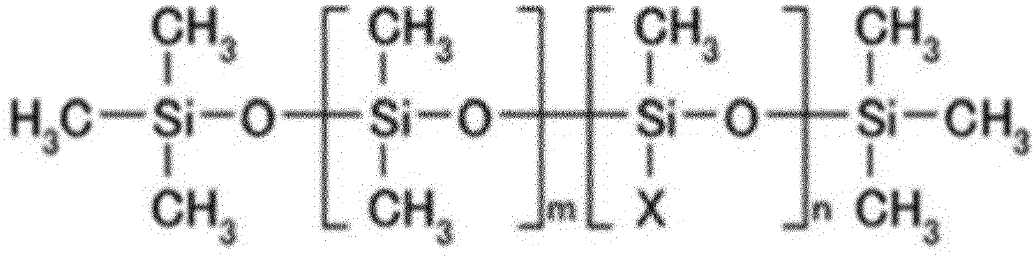

$$X = -R(C_2H_4O)_a\ (C_3H_6O)_b\ R'$$

In General formula S-1, "m", "n", "a", and "b" each, respectively represent integers, R represents an alkylene group, and R' represents an alkyl group.

Products available on the market may be used as the polyether-modified silicone-based surfactants. Specific examples of the products available on the market include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Silicone Co., Ltd.), BYK-33 and BYK-387 (both manufactured by Byk Chemie Japan Co., Ltd.), and TSF4440, TSF4452, and TSF4453 (all manufactured by Toshiba Silicone Co., Ltd.).

Specific examples of the fluoro surfactants include, but are not limited to, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain. These fluoro surfactants are particularly preferable because these fluoro surfactants do not foam easily. Specific examples of the perfluoroalkyl sulfonic acid compounds include, but are not limited to, perfluoroalkyl sulfonic acid and salts of perfluoroalkyl sulfonic acid. Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain. Counter ions of salts in these fluorine-based surfactants are, for example, Li, Na, K, $NH_4$, $NH_3CH_2CH_2OH$, $NH_2(CH_2CH_2OH)_2$, and $NH(CH_2CH_2OH)_3$.

Specific examples of the amphoteric surfactants include, but are not limited to, lauryl aminopropionic acid salts, lauryl dimethyl betaine, stearyl dimethyl betaine, and lauryl dihydroxy ethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

These surfactants can be used alone or in combination.

The fluorosurfactant in which the number of carbon atoms replaced with fluorine atoms is from 2 to 16 and more preferably from 4 to 16 is preferable.

Specific examples of the fluorosurfactants include, but are not limited to, perfluoroalkyl phosphoric acid ester

compounds, adducts of perfluoroalkyl ethylene oxide, and polyoxyalkylene ether polymer compounds having a perfluoroalkyl ether group in its side chain. Of these fluorosurfactants, polyoxyalkylene ether polymer compounds having a perfluoroalkyl ether group in its side chain are preferable because these compounds do not foam easily and the fluorosurfactant represented by the following General formula F-1 or General formula F-2 is particularly preferable.

[General Formula (F-1)] $\mathbf{CF_3CF_2(CF_2CF_2)_m\text{-}CH_2CH_2O(CH_2CH_2O)_n H}$

In the General formula (F-1), "m" is preferably 0 or an integer of from 1 to 10 and "n" is preferably 0 or an integer of from 1 to 40 in order to provide water solubility.

[General formula (F-2)] $C_nF_{2n+1}\text{-}CH_2CH(OH)CH_2\text{-}O\text{-}(CH_2CH_2O)_a\text{-}Y$

In the General formula F-2, Y represents H, $C_mF_{2m+1}$, where "m" is an integer of from 1 to 6, $CH_2CH(OH)CH_2\text{-}C_mF_{2m+1}$, where m represents an integer of from 4 to 6, or $C_pH_{2p+1}$, where p represents an integer of from 1 to 19. "n" represents an integer of from 1 to 6. "a" represents an integer of from 4 to 14.

Products available on the market may be used as the fluorosurfactant.

Specific examples of the products available on the market include, but are not limited to, SURFLON S-111, S-112, S-113, S-121, S-131, S-132, S-141, and S-145 (all available from ASAHI GLASS CO., LTD.); FLUORAD FC-93, FC-95, FC-98, FC-129, FC-135, FC-170C, FC-430, and FC-431 (all available from SUMITOMO 3M); MEGAFAC F-470, F-1405, and F-474 (all available from DIC Corporation); ZONYL TBS, FSP, FSA, FSN-100, FSN, FSO-100, FSO, FS-300, and UR, and CAPSTONE (registered trademark) FS-30, FS-31, FS-3100, FS-34, and FS-35 (all available from the Chemours Company); FT-110, FT-250, FT-251, FT-400S, FT-150, and FT-400SW (all available from NEOS COMPANY LIMITED), POLYFOX PF-136A,PF-156A, PF-151N, PF-154, and PF-159 (available from OMNOVA SOLUTIONS INC.), and UNIDYNE DSN-403N (available from DAIKIN INDUSTRIES). Of these products, FS-3100, FS-34, and FS-300 available from the Chemours Company, FT-110, FT-250, FT-251, FT-400S, FT-150, and FT-400SW all available from NEOS COMPANY LIMITED, POLYFOX PF-151N available from OMNOVA SOLUTIONS INC., and UNIDYNE DSN-403N available from DAIKIN INDUSTRIES are particularly preferable in terms of good printing quality, coloring in particular, and improvement on permeation, wettability, and uniform dyeing property to paper.

The proportion of the surfactant in the clear ink is preferably 2% by mass or less. The surfactant at 2% by mass or less can ensure sufficient defoamability.

-Organic solvent-

The organic solvent is not particularly limited and may be appropriately selected depending on the intended purpose. Examples of the organic solvent include, but are not limited to, water-soluble organic solvents. Water solubility means, for example, solubility of 5 g or greater in 100 g of water at 25 degrees Celsius.

Examples of the water-soluble organic solvent include, but are not limited to: polyvalent alcohols such as ethylene glycol, diethylene glycol, 1,2-propanediol, 1,3-propanediol, 1,2-butanediol, 1,3-butanediol, 2,3-butanediol, 3-methyl-1,3-butanediol, 3-methoxy-3-methyl butanol, triethylene glycol, polyethylene glycol, polypropylene glycol, 1,5-pentanediol, 2-methyl-2,4-pentanediol, 1,6-hexanediol, glycerin, 1,2,6-hexanetriol, 2-ethyl-1,3-hexanediol, ethyl 1,2,4-butanetriol, 1,2,3-butanetriol, and petriol; polyvalent alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monoethyl ether, and dipropylene glycol monomethyl ether; polyvalent alcohol aryl ethers such as ethylene glycol monophenyl ether, and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl imidazolidinone, ε-caprolactam, and γ-butyrolactone; amides such as formamide, N-methyl formamide, and N,N-dimethyl formamide; amines such as monoethanol amine, diethanol amine, and triethyl amine; sulfur-containing compounds such as dimethyl sulfoxide, sulfolane, and thiodiethanol; and propylene carbonate, and ethylene carbonate. These water-soluble organic solvents may be used alone or in combination.

The proportion of the organic solvent in the clear ink is not particularly limited, may be appropriately selected depending on the intended purpose, and is preferably 10% by mass or greater but 60% by mass or less and more preferably 20% by mass or greater but 60% by mass or less in terms of drying property and discharging reliability of the ink.

The clear ink may contain a defoaming agent, a preservative and fungicide, a corrosion inhibitor, and a pH regulator as other components as needed.

-Defoaming agent-

The defoaming agent has no particular limit. For example, silicone-based defoaming agents, polyether-based

defoaming agents, and aliphatic acid ester-based defoaming agents are suitable. These defoaming agents can be used alone or in combination. Of these defoaming agents, silicone-based defoaming agents are preferable to easily break foams.

-Preservative and fungicide-

The preservatives and fungicides are not particularly limited. A specific example is 1,2-benzisothiazolin-3-on.

-Corrosion inhibitor-

The corrosion inhibitor has no particular limit. Examples thereof are acid sulfite and sodium thiosulfate.

-pH regulator-

The pH regulator has no particular limit. It is preferable to adjust the pH to 7 or higher. Specific examples thereof include, but are not limited to, amines such as diethanol amine and triethanol amine.

The property of the clear ink is not particularly limited and can be suitably selected to suit to a particular application. For example, viscosity, surface tension, pH, etc., are preferably in the following ranges.

The viscosity of the clear ink at 25 degrees Celsius is preferably from 5 to 30 mPa·s and more preferably from 5 to 25 mPa·s to improve print density and text quality and obtain good dischargeability. The viscosity can be measured by, for example, a rotatory viscometer (RE-80L, manufactured by TOKI SANGYO CO., LTD.). The measuring conditions are as follows:

- Standard cone rotor (1°34' × R24)
- Sample liquid amount: 1.2 mL
- Number of rotations: 50 rotations per minute (rpm)
- 25 degrees C
- Measuring time: three minutes

The surface tension of the clear ink is preferably 35 mN/m or less and more preferably 32 mN/m or less at 25 degrees Celsius in terms that the clear ink is suitably levelized on a print medium and the drying time of the clear ink is shortened.

The pH of the clear ink is preferably from 7 to 12 and more preferably from 8 to 11 in terms of prevention of corrosion of metal materials contacting the ink.

<Print target>

A print target is not limited to articles used as typical print media. It is suitable to use building materials such as wall paper, floor material, and tiles, cloth for apparel such as T-shirts, textile, and leather as the print medium. In addition, the configuration of the paths through which the print medium is transferred can be adjusted to accommodate ceramics, glass, metal, etc. as the print target.

The print medium for use in printing is not particularly limited. Plain paper, gloss paper, special paper, cloth, etc. are usable. Also, good images can be formed on a non-permeating substrate.

The non-permeating substrate has a surface with low moisture permeability and absorbency and includes a material having myriad of hollow spaces inside but not open to the outside. To be more quantitative, the substrate has a water-absorption amount of 10 $mL/m^2$ or less between the contact and 30 $msec^{1/2}$ after the contact according to Bristow method.

For example, plastic films of vinyl chloride resin, polyethylene terephthalate (PET), acrylic resins, polypropylene, polyethylene, and polycarbonate are suitably used for the non-permeating substrate.

Now, embodiments of the present disclosure will be described with reference to the accompanying drawings.

In the following description of the discharge apparatus and the printing method, a case of using a black (K) ink, a cyan (C) ink, a magenta (M) ink, and a yellow (Y) ink will be described. Instead, or in addition, an aqueous clear ink may be used.

The clear ink of the present disclosure can be suitably applied to various discharge apparatuss employing an inkjet printing method such as printers, facsimile machines, photocopiers, multifunction peripherals (serving as a printer, a facsimile machine, and a photocopier), and 3D model manufacturing devices (3D printers, additive manufacturing device).

The inkjet discharge apparatus includes both a serial type device in which the liquid discharging head is caused to move and a line type device in which the liquid discharging head is not moved, unless otherwise specified.

Furthermore, in addition to the desktop type, this inkjet discharge apparatus includes a wide type, a continuous printer capable of using continuous paper wound up in a roll form as print media.

In the present disclosure, the discharge apparatus and the printing method represent a device capable of discharging ink, various processing fluids, etc. to a print medium and a method printing an image on the print medium using the device. The print medium means an article to which the ink or the various processing fluids can be attached at least temporarily.

This discharge apparatus may further optionally include a device relating to feeding, conveying, and ejecting the print medium and other devices referred to as a pre-processing device, a post-processing device, etc. in addition to the head portion to discharge the ink.

In addition, the discharge apparatus and the printing method are not limited to those producing merely meaningful visible images such as texts and figures with the ink. For example, the printing apparatus and the printing method can produce patterns like geometric design and 3D images.

The discharge apparatus includes both a serial type device in which the liquid discharging head is caused to move and a line type device in which the liquid discharging head is not moved, unless otherwise specified.

Furthermore, in addition to the desktop type, this discharge apparatus includes a wide type capable of printing images on a large print medium such as A0, a continuous printer capable of using continuous paper wound up in a roll form as print media.

The discharge apparatus of the present disclosure is described with reference to FIG. 1 and FIG. 2. FIG. 1 is a perspective view of the discharge apparatus. FIG. 2 is a perspective view of the main tank. An image forming apparatus 400 as an example of the discharge apparatus is a serial type image forming apparatus. A mechanical unit 420 is disposed in an exterior 401 of the image forming apparatus 400. Each ink accommodating unit (ink container) 411 of each main tank 410 (410k, 410c, 410m, and 410y) for each color of black (K), cyan (C), magenta (M), and yellow (Y) is made of a packing member such as aluminum laminate film. The ink container 411 is accommodated in a plastic housing unit 414. As a result, the main tank 410 is used as an ink cartridge of each color.

A cartridge holder 404 is disposed on the rear side of the opening when a cover 401c of the main body is opened. The cartridge holder 404 is detachably attached to the main tank 410. As a result, each ink discharging outlet 413 of the main tank 410 is communicated with a discharging head 434 for each color via a supplying tube 436 for each color so that the ink can be discharged from the discharging head 434 to a print medium.

This discharge apparatus may include not only a portion discharging ink but also a device referred to as a pre-processing device, a post-processing device, etc.

As an example of the pre-processing device and the post-processing device, as in the case of the ink such as black (K), cyan (C), magenta (M), and yellow (Y), a liquid container containing a pre-processing fluid or a post-processing fluid and a liquid discharging head are added to discharge the pre-processing fluid or the post-processing fluid in an inkjet printing method.

As another example of the pre-processing device and the post-processing device, it is suitable to dispose a pre-processing device and a post-processing device employing a blade coating method, a roll coating method, or a spray coating method other than the inkjet printing method.

FIG. 3 illustrates the interior of the main body of an inkjet printing apparatus, in which a print head 2, a platen 11, a roll media accommodating section 19, a heating unit, etc. are arranged.

A carriage 15 includes a clear ink and if necessary color inks of black (K), yellow (Y), magenta (M), and cyan (C). The carriage 15 also includes the print head 2, which is a discharging unit configured to discharge ink droplets.

The roll media accommodating section 19 is a sheet feeding unit and includes a roll medium (print medium) 30 that is a print target.

A conveying unit 60 includes a feed roller 34 and a press roller 35 that are provided in the vertical direction to face each other via the platen 11.

The feed roller 34 and the press roller 35 sandwich a print target (print medium) 29 therebetween. When the feed roller 34 is rotated forward (the arrow direction in FIG. 3), the print medium 29, which has been fed onto the platen 11, can be conveyed forward on the platen 11.

The inkjet printing apparatus is provided with: a pre-heater 40 located upstream the platen 11 in the print medium conveying direction and configured to preliminarily heat the print medium 29 (heating before printing); and a print heater 41 as a heating unit configured to perform heating when the clear ink is deposited to the print target from the nozzle of the print head (heating during printing).

Downstream the print head 2, a post-heater 42 may be provided downstream the platen 11 (heating after printing). It is preferable to provide the post-heater 42 because the print medium 29 can be heated again to promote drying of the ink droplets that have landed thereon.

The pre-heater 40, the print heater 41, and the post-heater 42 for use are, for example, conductive heaters using ceramics and nichrome wires. Other heating units such as a hot air heating unit may be used.

Downstream the start point of the post-heater 42, an additional heating unit may be provided, such as a hot air fan

43 configured to blow hot air to the printing surface of the print medium 29 on which the ink has landed. After the ink has been completely dried by directly blowing hot air to the ink on the printing surface with the hot air fan, the print medium 29 can be rolled up with a roll-up roller 39.

According to examples not according to the invention, to use the ink is not limited to the inkjet printing method and can be a wide variety of ways. Examples of such methods other than the inkjet printing method include, but are not limited to, blade coating methods, gravure coating methods, bar coating methods, roll coating methods, dip coating methods, curtain coating methods, slide coating methods, die coating methods, and spray coating methods.

The applications of the ink of the present invention are not particularly limited and can be suitably selected to suit to a particular application. For example, the ink can be used for printed matter, a paint, a coating material, and foundation. The ink can be used to form two-dimensional texts and images and furthermore a three-dimensional solid object (3D modeling object) as a material for 3D modeling.

An apparatus for fabricating a three-dimensional object can be any known device with no particular limit. For example, the apparatus includes an ink container, a supplying device, and a discharging device, a drier, etc. The three-dimensional solid object includes an object manufactured by re-applying ink. In addition, the three-dimensional solid object can be manufactured by processing a structure having a substrate such as a print medium printed with the ink as a molded processed product. The molded processed product is fabricated by, for example, heating drawing or punching a structure or printed matter having a sheet-like form, film-like form, etc.

The molded processed product is suitable as a product of molding performed after surface-decoration. Examples thereof are gauges or operation panels of vehicles, office machines, electric and electronic machines, cameras, etc.

<Cleaning unit>

The cleaning unit is a unit configured to wipe an ink attached onto the plane of the nozzle plate when the ink is discharged from the nozzle holes.

When performing cleaning, a maintenance recovery mechanism including the wiping member may be moved to clean the head with the ink discharge head being not moved.

The maintenance recovery mechanism configured to wipe the nozzle-formed surface includes mainly a wiping member in the form of a sheet, a roller to send the wiping member in the form of a sheet, a press roller configured to press the sent wiping member against the nozzle plate surface, and a winding roller configured to recover the wiping member used for wiping. In addition to the wiping member in the form of a sheet, moreover, the maintenance recovery mechanism may include, for example, a rubber blade for wiping the nozzle-formed surface. The press roller uses a spring, and a press force of the press roller can be adjusted by adjusting a distance between the cleaning unit and the nozzle plate surface. The press member is not limited to a roller, and may be a fixed member formed of a resin or rubber. In the case where the maintenance recovery mechanism includes, for example, the rubber blade, a cleaning feature of the rubber blade may be imparted to the wiping member in the form of a sheet by disposing a mechanism where the rubber blade is brought into contact with the wiping member in the form of a sheet.

As a droplet-discharging device including the wiping member, the structure of a serial type droplet discharge device will be given as an example. However, the present disclosure is not limited thereto in any way. This droplet-discharging device will be described with reference to FIG. 4 and FIG. 5.

A carriage 3 is movably held with a main guide member 1 and a sub guide member which are laterally bridged to left and right side plates. The carriage 3 is driven reciprocately in a main-scanning direction (a carriage travel direction) by a main scanning motor 5 via a timing belt 8 supported by a drive pulley 6 and an idler pulley 7.

Print heads 4a and 4b (which will be referred to simply as a "print head 4" when they are not distinguished) each formed of a discharge head are mounted in the carriage 3. For example, the print head 4 discharges ink droplets of each color, e.g., yellow (Y), cyan (C), magenta (M), or black (K). Moreover, the print head 4 includes a nozzle array 4n formed of a plurality of nozzles arranged in a sub-scanning direction orthogonal to the main-scanning direction, and the print head 4 is mounted in a manner that a droplet discharge direction faces downwards.

As illustrated in FIG. 5, the print head 4 includes two nozzle arrays Na and Nb in each of which a plurality of nozzle arrays 4n are aligned.

As the discharge head constituting the print head 4, for example, a piezoelectric actuator (e.g., a piezoelectric element) or a thermal actuator using a phase change due to film boiling of a liquid using a thermoelectric conversion element (e.g., a heat resistor) can be used.

In order to convey sheets 10, disposed is a conveyor belt 12 configured to electrostatically attract a sheet to convey the sheet to a position facing the print head 4. The conveyor belt 12 is an endless belt, and is supported between a conveying roller 13 and a tension roller 14.

The conveyor belt 12 is rotated in the sub-scanning direction by rotationally driving the conveying roller 13 by a sub-scanning motor 16 via a timing belt 17 and a timing pulley 18. The conveyor belt 12 is charged (given charges) by a charging roller while the conveyor belt 12 is rotating.

At one side of the main-scanning direction of the carriage 3, a maintenance recovery mechanism 20 configured to perform maintenance and recovery of the print head 4 is disposed at the side of the conveyor belt 12. At the other side of the main-scanning direction of the carriage 3, an idle discharge receiver 21 to which the print head 4 performs idle discharge is disposed at the side of the conveyor belt 12.

For example, the maintenance recovery mechanism 20 includes a cap member 20a configured to cap a nozzle-formed surface (a surface in which nozzles are formed) of the print head 4, a wiping mechanism 20b configured to wipe the nozzle-formed surface, and the idle discharge receiver to which droplets not contributing to image formation are discharged.

An encoder scale 23 having a predetermined pattern is stretched between the side plates of both sides along the main-scanning direction of the carriage 3. An encoder sensor 24 formed of a transmission photosensor configured to read the pattern of the encoder scale 23 is disposed in the carriage 3. The encoder scale 23 and the encoder sensor 24 constitute a linear encoder (a main scanning encoder) configured to detect the movement of the carriage 3.

A code wheel 25 is attached to the shaft of the conveying roller 13. An encoder sensor 26 formed of a transmission photosensor configured to detect the pattern formed in the code wheel 25 is disposed. The code wheel 25 and the encoder sensor 26 constitute a rotary encoder (a sub-scanning encoder) configured to detect an amount of movement and moving position of the conveyor belt 12.

**In** the image forming apparatus constructed in the above-described manner, a sheet 10 is fed from a paper feeding tray onto the charged conveyor belt 12 and electrostatically attracted thereon. The sheet 10 is conveyed in the sub-scanning direction by the rotation of the conveyor belt 12.

The print head 4 is driven in response to the image signal while the carriage 3 is being moved in the main-scanning direction, and ink droplets are discharged on the sheet 10 that is stopping to perform printing by one line. Then, the sheet 10 is conveyed by a predetermined distance, followed by performing printing for the next line.

The printing operation is terminated by receiving a recording termination signal or a signal informing that the rear end of the sheet 10 reaches the recording region, and then the sheet 10 is discharged to the paper discharge tray.

When cleaning of the print head 4 is performed, the carriage 3 is moved to the maintenance recovery mechanism 20 during standing by for printing (recording), and then cleaning is performed by the maintenance recovery mechanism 20. The print head 4 may be cleaned by moving the maintenance recovery mechanism 20 with the print head 4 being not moved.

The recording head 4 illustrated in FIG. 4 includes two nozzle arrays Na and Nb in each of which a plurality of nozzle arrays 4n are aligned as illustrated in FIG. 5. One nozzle array Na of the print head 4a discharges droplets of black (K), and the other nozzle array Nb discharges droplets of cyan (C). One nozzle array Na of the print head 4b discharges droplets of magenta (M), and the other nozzle array Nb discharges droplets of yellow (Y).

As illustrated in FIG. 6, the wiping mechanism 20b configured to wipe the nozzle-formed surface 9 includes mainly a wiping member 320 in the form of a sheet, a roller 210 to send the wiping member in the form of a sheet, a press roller 200 configured to press the sent wiping member 320 against the nozzle-formed surface 9, and a winding roller 220 configured to recover the wiping member 320 used for wiping. In addition to the wiping member in the form of a sheet, the wiping mechanism 20b may include, for example, a rubber blade for wiping the nozzle-formed surface 9. The press roller 200 uses a spring, and a press force of the press roller 220 can be adjusted by adjusting a distance between the cleaning unit and the nozzle-formed surface 9. The press member is not limited to a roller, and may be a fixed member formed of a resin or rubber. In the case where the wiping mechanism 20b includes the rubber blade, a cleaning feature of the rubber blade may be imparted to the wiping member in the form of a sheet by disposing a mechanism where the rubber blade is brought into contact with the wiping member in the form of a sheet.

After applying a predetermined amount of a cleaning liquid to the wiping member, the cleaning unit and the head are relatively moved while the wiping member is being against the nozzle-formed surface 9 to wipe foreign matter 500 deposited on the nozzle-formed surface 9. Examples of the foreign matter 500 deposited on the nozzle-formed surface 9 include, but are not limited to: a mist ink generated when the ink is discharged from the nozzle; the ink deposited when the ink is suctioned from the nozzle by, for example, cleaning; the adhesion ink generated when the mist ink or the ink deposited on the capping member are dried on the nozzle-formed surface 9; and paper dust generated from the print target. The wiping member may be impregnated with the cleaning liquid in advance. Depending on a sequence employed, wiping may be performed without applying the cleaning liquid. Especially when it is expected that the ink would be dried and adhere on the nozzle-formed surface 9, for example, after a long-term stand by, it is desirable to wipe the nozzle-formed surface 9 several times with the cleaning liquid-containing wiping member in the form of a sheet, to thereby remove the ink.

FIG. 7 is a schematic diagram illustrating one example of the cross-section of the wiping member 320 in the form of a sheet.

The wiping member 320 in the form of a sheet illustrated in FIG. 7 is made of non-woven fabric and has a bi-layered structure including sequentially, from the contact side thereof with the nozzle-formed surface, the first layer 610 that comes into contact with the nozzle-formed surface and the second layer 620. Besides, the wiping member 320 may have, for example, a three-layered structure lined with a film for preventing offset of the absorbed ink and increasing the

strength of the wiping member, or a multi-layered structure including several absorbable layers different in absorbency provided after the second layer.

Examples of materials constituting the wiping member include, but are not limited to, woven fabric, knitted fabric, and porous materials in addition to non-woven fabric. Non-woven fabric is preferable as the first layer because the non-woven fabric is relatively easy in terms of controlling the thickness and the porosity thereof. Materials of fibers, such as non-woven fabric, woven fabric, and knitted fabric include, but are not limited to, cotton, hemp, silk, pulp, nylon, vinylon, polyester, polypropylene, polyethylene, rayon, cupra, acrylic, and polylactic acid. Non-woven fabric may be made not only of one type of fiber but also be of mixed two or more types of fibers. Examples of the porous body include, but are not limited to, polyurethane, polyolefin, and PVA. Examples of methods for producing non-woven fabric include, but are not limited to, wet type, dry type, spun bonding, melt blown, and flash spinning to form webs, and spun lacing, thermal bonding, chemical bonding, and needle punching to bond the webs.

When the thickness of the first layer is less than the total thickness of the layers excluding the first layer, and the porosity of the first layer is lower than the porosity of at least one layer of the layers excluding the first layer, the ability of scraping off the adhesion ink is enhanced, thereby ameliorating the wiping ability for the adhesion ink. The porosity is calculated as follows.

$$\text{Porosity} = 1 - \text{Apparent density}/\text{True density} \qquad \text{Formula (1)}$$

Formula (1)

Regarding a non-woven fabric sheet, etc., the above "True density" is the true density of the fibers forming the sheet, and the above "Apparent density" can be obtained by dividing the basis weight of the sheet material by thickness; i.e., [basis weight/thickness].

When the thickness is small and the porosity is small, the wiping member to wipe the adhesion ink has a high scraping ability but cannot hold liquid components of, for example, the ink and the cleaning liquid. As a result, a single-layered wiping member has insufficient cleaning ability. Therefore, the wiping member has a portion capable of holding the liquid component in a layer other than the first layer while keeping the relationship of the present disclosure between the layers of the wiping member, which is advantageous.

The porosity of the first layer is preferably 0.60 or more but 0.85 or less and more preferably 0.75 or more but 0.80 or less. When the porosity of the first layer is 0.60 or more but 0.85 or less, the ability to wipe the adhesion ink can be improved, preventing the wiping member from becoming filmy and ameliorating liquid permeability.

The porosity of at least one layer of the layers excluding the first layer is preferably 0.80 or more but 0.99 or less. When the porosity of the at least one layer of the layers excluding the first layer is within the above range, the liquid absorbency can be improved. By combining the first layer and the layers other than the first layer, the wiping member can strike a balance between scraping ability and liquid absorption, thereby improving wiping ability.

The thickness of the wiping member is preferably 0.1 mm or more but 3 mm or less and more preferably 0.2 mm or more but 0.7 mm or less. When the thickness of the wiping member is 0.1 mm or more, a saturated water absorption amount of the liquid per area of the wiping member is sufficient, and the target ink can be sufficiently absorbed. When the thickness of the wiping member is 3 mm or less, the liquid component of the ink can be transferred from the first layer to the layer other than the first layer without degrading the absorption ability of the layer other than the first layer. Therefore, the apparatus can be downsized.

At least the first layer of the wiping member is preferably made of non-woven fabric. When non-woven fabric is used, a desirable numerical range of the thickness and a desirable numerical range of the porosity can be easily set.

The wiping surface of the wiping member preferably has a surface roughness Rz of 170 micrometers or more obtained by surface roughness measurement by using, for example, a laser microscope. When the surface roughness Rz of the wiping surface is 170 micrometers or more, the meniscus in the nozzle is not easily broken so that the nozzle surface can be wiped without causing discharging failures.

Moreover, image forming, recording, printing, etc. in the present disclosure represent the same meaning.

A print medium, media, and a print target represent the same meaning.

## Examples

The present disclosure will be described below by way of Examples. The present disclosure should not be construed as being limited to these Examples. Unless otherwise described, preparation, evaluation, etc. were performed at room temperature of 25 degrees Celsius at a humidity of 60%.

(Preparation Example 1)

<Preparation of resin emulsion 1>

-Polycarbonate-based polyurethane resin-

A reaction container into which a stirrer, a reflux condenser, and a thermometer were inserted was charged with polycarbonate diol (a reaction product of 1,6-hexanediol and dimethyl carbonate, with a number average molecular weight (Mn) of 1,200) (1,500 parts by mass), 2,2-dimethylolpropinonic acid (hereinafter may be referred to as "DMPA") (300 parts by mass), and N-methyl pyrrolidone (hereinafter may be referred to as "NMP") (1,420 parts by mass) under a nitrogen stream. The materials were heated to 60 degrees Celsius to dissolve DMPA.

Next, 4,4'-dicyclohexylmethane diisocyanate (1,824 parts by mass) and dibutyl tin dilaurate (catalyst) (2.6 parts by mass) were added to the resultant and heated to 90 degrees Celsius, to allow the materials to undergo a urethanation reaction for five hours, to obtain an isocyanate-terminated urethane prepolymer. This reaction product was cooled to 80 degrees Celsius. To the resultant, triethylamine (260 parts by mass) was added and mixed. From the resultant, 4,340 parts by mass was extracted and added in a mixture solution of water (5,400 parts by mass) and triethylamine (15 parts by mass) under strong stirring.

Next, ice (1,500 parts by mass) was added to the resultant, and a 35% by mass 2-methyl-1,5-pentanediamine aqueous solution (830 parts by mass) was added to the resultant to allow the materials to undergo a chain elongation reaction. The solvent was evaporated from the resultant to adjust the solid component concentration to 30% by mass, to obtain a resin emulsion 1.

The glass transition temperature (Tg) of the obtained resin emulsion 1 measured according to <Method for measuring glass transition temperature of resin emulsion> described below was 55 degrees Celsius. The volume average particle diameter of the resin emulsion 1 measured with a particle size analyzer (NANOTRAC WAVE II, obtained from MicrotracBEL Corporation) was 44 nm.

<Method for measuring glass transition temperature of resin emulsion>

The glass transition temperature of the resin emulsion was measured with differential scanning calorimeters (TA-60WS and DSC-60, obtained from Shimadzu Corporation).

The resin emulsion (4 g) was poured into a petri dish having a diameter of 50 mm and formed of a tetrafluoroethylene/perfluoroalkyl vinyl ether copolymer (PFA) in a manner that the resin emulsion would spread uniformly. The resin emulsion was dried at 50 degrees Celsius for one week, to obtain a resin film. Five point zero milligrams of the resin film was put in a sample container formed of aluminum, and the sample container was put on a holder unit and set in an electric furnace. Next, under a nitrogen atmosphere, the sample was subjected to temperature elevation from 0 degrees Celsius to 150 degrees Celsius at a temperature elevation rate of 10 degrees C/min, then to temperature reduction from 150 degrees Celsius to -80 degrees Celsius at a temperature reduction rate of 5 degrees C/min, and then further to temperature elevation to 150 degrees Celsius at a temperature elevation rate of 10 degrees C/min, to measure a DSC curve. With an analyzing program of the DSC-60 system, the obtained DSC curve was analyzed by a mid-point method based on the inflection point in the second temperature elevation, to obtain a glass transition temperature (Tg).

(Preparation Example 2)

<Preparation of resin emulsion 2>

-Polyester-based polyurethane resin-

A reaction vessel having a capacity of 2 L and equipped with a stirrer, a thermometer, a nitrogen-sealed tube, and a cooler was charged with methyl ethyl ketone (100 parts by mass), polyester polyol obtained from polyester polyol (1) (iPA/AA=6/4 (ratio by mole)) and EG/NPG=1/9 (ratio by mole) (with a number average molecular weight: 2,000, and an average number of functional groups: 2, iPA: isophthalic acid, AA: adipic acid, EG: ethylene glycol, and NPG: neopentyl glycol) (345 parts by mass), and 2,2-dimethylolpropionic acid (DMPA) (9.92 parts by mass). The materials were mixed uniformly at 60 degrees Celsius.

Subsequently, triethylene glycol diisocyanate (TEGDI) (40.5 parts by mass) and dioctyl tin dilaurate (DOTDL) (0.08 parts by mass) were added to the resultant, and allowed to undergo reaction at 72 degrees Celsius for three hours, to obtain a polyurethane solution.

IPA (80 parts by mass), MEK (220 parts by mass), triethanolamine (TEA) (3.74 parts by mass), and water (596 parts by mass) were added to the polyurethane solution to change the phase of the polyurethane solution. Subsequently,

MEK and IPA were removed from the resultant with a rotary evaporator, to obtain a resin emulsion 2.
After the obtained aqueous emulsion was cooled to normal temperature, ion-exchanged water and a sodium hydroxide aqueous solution were added to the resultant to adjust the solid component concentration to 30% by mass and pH to 8.
The glass transition temperature of the prepared resin emulsion 2 measured in the same manner as the resin emulsion 1 was -4 degrees Celsius.
The volume average particle diameter of the prepared resin emulsion 2 measured in the same manner as the resin emulsion 1 was 105 nm.

(Preparation Example 3)

<Preparation of resin emulsion 3>

-Polycarbonate-based polyurethane resin-

A reaction vessel into which a stirrer, a reflux condenser, and a thermometer were inserted was charged with polycarbonate diol (a reaction product of 1,6-hexanediol and dimethyl carbonate, with a number average molecular weight (Mn): 1,000) (1,500 parts by mass), 2,2-dimethylolpropionic acid (hereinafter may be referred to as "DMPA") (260 parts by mass), and N-methyl pyrrolidone (hereinafter may be referred to as "NMP") (1,320 parts by mass) under a nitrogen stream. The materials were heated to 60 degrees Celsius to dissolve DMPA.
Next, 4,4'-dicyclohexylmethane diisocyanate (1,530 parts by mass) and dibutyl tin laurate (catalyst) (2.6 parts by mass) were added to the resultant and heated to 90 degrees Celsius, to allow the materials to undergo a urethanation reaction for five hours, to obtain an isocyanate-terminated urethane prepolymer. This reaction mixture was cooled to 80 degrees Celsius. Triethylamine (245 parts by mass) was added and mixed in the resultant. From the resultant, 4,340 parts by mass was extracted and added in a mixture solution of water (5,400 parts by mass) and triethylamine (15 parts by mass) under strong stirring.
Next, ice (1,500 parts by mass) was added to the resultant, and a 35% by mass 2-methyl-1,5-pentanediamine aqueous solution (793 parts by mass) was added to the resultant, to allow the materials to undergo a chain elongation reaction. The solvent was evaporated from the resultant to adjust the solid component concentration to 30% by mass, to obtain a resin emulsion 3.
The glass transition temperature (Tg) of the obtained resin emulsion 3 measured in the same manner as the resin emulsion 1 was 45 degrees Celsius. The volume average particle diameter of the resin emulsion 3 measured in the same manner as the resin emulsion 1 was 40 nm.

(Preparation Example 4)

<Preparation of resin emulsion 4>

-Polycarbonate-based polyurethane resin-

A reaction vessel into which a stirrer, a reflux condenser, and a thermometer were inserted was charged with polycarbonate diol (a reaction product of 1,6-hexanediol and dimethyl carbonate, with a number average molecular weight (Mn) of 1,200) (1,500 parts by mass), 2,2-dimethylolpropionic acid (hereinafter may be referred to as "DMPA") (350 parts by mass), and N-methyl pyrrolidone (hereinafter may be referred to as "NMP") (2,300 parts by mass) under a nitrogen stream. The materials were heated to 60 degrees Celsius to dissolve DMPA.
Next, 4,4'-dicyclohexylmethane diisocyanate (2,100 parts by mass) and dibutyl tin dilaurate (catalyst) (2.6 parts by mass) were added to the resultant and heated to 90 degrees Celsius, to allow the materials to undergo a urethanation reaction for five hours, to obtain an isocyanate-terminated urethane prepolymer. This reaction mixture was cooled to 80 degrees Celsius. Triethylamine (270 parts by mass) was added and mixed in the resultant. From the resultant, 4,340 parts by mass was extracted and added in a mixture solution of water (5,400 parts by mass) and triethylamine (15 parts by mass) under strong stirring.
Next, ice (1,500 parts by mass) was added to the resultant, and a 35% by mass 2-methyl-1,5-pentanediamine aqueous solution (800 parts by mass) was added to the resultant, to allow the materials to undergo a chain elongation reaction. The solvent was evaporated from the resultant to adjust the solid component concentration to 30% by mass, to obtain a resin emulsion 4.
The glass transition temperature of the obtained resin emulsion 4 measured in the same manner as the resin emulsion 1 was 56 degrees Celsius. The volume average particle diameter of the resin emulsion 4 measured in the same manner as the resin emulsion 1 was 57 nm.

(Production Example 1)

-Production of clear ink A-

The resin emulsion 1 of Preparation Example 1 (with a solid component concentration of 30% by mass) (29.6% by mass), the resin emulsion 2 of Preparation Example 2 (with a solid component concentration of 30% by mass) (0.4% by mass), 1,2-propanediol (16.5% by mass), 1,3-propanediol (11% by mass), 1,2-butanediol (3% by mass), a surfactant "FS-300" (product name) (obtained from Du Pont K.K., a flurosurfactant, with a solid component concentration of 40% by mass) (6% by mass), and highly pure water (33.5% by mass) were added together and mixed and stirred, to prepare a mixture.

Next, the obtained mixture was filtrated through a polypropylene filter having an average pore diameter of 0.2 micrometers (product name: BETAFINE POLYPROPYLENE PLEATED FILTER PPG SERIES, obtained from 3M Limited), to produce clear ink A.

(Production Examples 2 to 10)

-Production of clear inks B to J-

Clear inks B to J were produced in the same manner as in Production Example 1, except that unlike in Production Example 1, the ink composition was changed to as presented in Table 1.

The glass transition temperature (Tg) of dried films of the clear inks A to J was measured according to <Method for measuring glass transition temperature of dried film of clear ink> described below. The volume average particle diameter of the clear inks was measured in the same manner as the resin emulsion 1.

The resin solid component concentration (% by mass) in the clear inks, and a mass ratio MA:MB between the mass MA of resin particles A having Tg of 50 degrees Celsius or higher and the mass MB of resin particles B having Tg of lower than 0 degrees Celsius in the clear inks are presented in Table 1 with the measurements of Tg of each ink and the measurements of the volume average particle diameter of each clear ink.

<Method for measuring glass transition temperature of dried film of clear ink>

The glass transition temperature of a dried film of a clear ink was measured with differential scanning calorimeters (TA-60WS and DSC-60, obtained from Shimadzu Corporation).

The clear ink (4 g) was poured into a petri dish having a diameter of 50 mm and formed of a tetrafluoroethylene/perfluoroalkyl vinyl ether copolymer (PFA) in a manner that the clear ink would spread uniformly. The clear ink was dried at 50 degrees Celsius for one week, to obtain an ink film. Five point zero milligrams of the ink film was put in a sample container formed of aluminum, and the sample container was put on a holder unit and set in an electric furnace. Next, under a nitrogen atmosphere, the sample was subjected to temperature elevation from 0 degrees Celsius to 150 degrees Celsius at a temperature elevation rate of 10 degrees C/min, then to temperature reduction from 150 degrees Celsius to -80 degrees Celsius at a temperature reduction rate of 5 degrees C/min, and then further to temperature elevation to 150 degrees Celsius at a temperature elevation rate of 10 degrees C/min, to measure a DSC curve. With an analyzing program of the DSC-60 system, the obtained DSC curve was analyzed by a mid-point method based on the inflection point in the second temperature elevation, to obtain a glass transition temperature (Tg).

Table 1

| | | Prodn. Ex. 1 | Prodn. Ex. 2 | Prodn. Ex. 3 | Prodn. Ex. 4 | Prodn. Ex. 5 | Prodn. Ex. 6 | Prodn. Ex. 7 | Prodn. Ex. 8 | Prodn. Ex. 9 | Prodn. Ex. 10 |
|---|---|---|---|---|---|---|---|---|---|---|---|
| | | Clear ink A | Clear ink B | Clear ink C | Clear ink D | Clear ink E | Clear ink F | Clear ink G | Clear ink H | Clear ink I | Clear ink J |
| Resin | Resin emulsion 1 | 29.6 | 29.3 | 27 | 24.9 | 22.5 | 32 | | 30 | | |
| | Resin emulsion 2 | 0.4 | 0.7 | 3 | 5.1 | 7.5 | 2 | 3 | | 3 | 30 |
| | Resin emulsion 3 | | | | | | | 27 | | | |
| | Resin emulsion 4 | | | | | | | | | 27 | |
| Water | High pure water | 33.5 | 33.5 | 33 | 32 | 31 | 30.5 | 32 | 34 | 33 | 20 |
| Surfactant | FS-300 | 6 | 6 | 6 | 6 | 6 | 6 | 6 | 6 | 6 | 6 |
| Organic solvent | 1,2-propanediol | 16.5 | 16.5 | 17 | 18 | 19 | 15.5 | 18 | 16 | 17 | 30 |
| | 1,3-propanediol | 11 | 11 | 11 | 11 | 11 | 11 | 11 | 11 | 11 | 11 |
| | 1,2-butanediol | 3 | 3 | 3 | 3 | 3 | 3 | 3 | 3 | 3 | 3 |
| Total (% by mass) | | 100 | 100 | 100 | 100 | 100 | 100 | 100 | 100 | 100 | 100 |
| Proportion of resin particles (solid component concentration) (% by mass) | | 9 | 9 | 9 | 9 | 9 | 10.2 | 9 | 9 | 9 | 9 |
| Volume average particle diameter of resin particles (nm) | | 44 | 44 | 46 | 47 | 49 | 46 | 41 | 44 | 56 | 105 |
| Mass ratio (MA:MB) between mass MA of resin particles A having Tg of 50°C or higher and mass MB of resin particles B having Tg of lower than 0°C | | 99:1 | 98:2 | 90:10 | 80:20 | 75:25 | 94:6 | - | - | 90:10 | - |
| Tg (°C) of dried film of clear ink | | 55°C, -4°C | 55°C, -4°C | 54°C, -3°C | 54°C, -3°C | 54°C, -3°C | 54°C, -3°C | 45°C, -3°C | 55°C | 55°C, -4°C | -4°C |

(Preparation Example 5)

<Preparation of self-dispersible magenta pigment dispersion>

After a mixture containing the following materials in the following amounts had been premixed, the mixture was dispersed under circulation for 7 hours with a disc type bead mill (obtained from Shinmaru Enterprises Corporation, model: KDL, media used: zirconia balls 0.3 mm in diameter) to obtain a self-dispersible magenta pigment dispersion (pigment solid component concentration: 15% by mass).

Pigment Red 122 (product name: TONER MAGENTA EO02, obtained from Clariant Japan K.K.): 15 parts by mass
Anionic surfactant (product name: PIONIN A-51-B, obtained from TAKEMOTO OIL & FAT Co., Ltd.): 2 parts by mass
Ion-exchanged water: 83 parts by mass

(Production Example 11)

-Production of magenta ink A-

The resin emulsion 1 (25% by mass) (solid component concentration: 30% by mass) of Preparation Example 1, the self-dispersible magenta pigment dispersion (20% by mass) (pigment solid component concentration: 15% by mass), 1,2-propanediol (20% by mass), 1,3-propanediol (11% by mass), 1,2-butanediol (3% by mass), a surfactant "FS-300" (product name) (obtained from Du Pont K.K., a flurosurfactant, with a solid component concentration of 40% by mass) (6% by mass), and high pure water (15% by mass) were added, followed by mixing and stirring, to prepare a mixture.

The obtained mixture was filtrated through a polypropylene filter having an average pore diameter of 0.2 micrometers (product name: BETAFINE polypropylene pleated filter PPG series, obtained from 3M), to produce magenta ink A.

(Example 1)

<Inkjet printing>

An ink cartridge of a modified device of an inkjet printer GXe5500 (obtained from Ricoh Company, Limited) was loaded with the clear ink A of Production Example 1. The ink cartridge loaded with the ink was mounted in the modified device of the inkjet printer GXe5500 to perform inkjet printing.

An image printed was a full solid image that had an image resolution of 600 dpi × 600 dpi and a printing rate of 100%. A heater (temperature adjusting controller, model: MTCD, obtained from MISUMI Corporation) was disposed in the modified device of the inkjet printer GXe5500 in a manner that a print medium could be heated from a back surface thereof before printing, during printing, and after printing. As a result, printing could be performed on the print medium heated by the heater before printing and during printing, and the printed matter could be heated and dried by the heater after printing.

-Heating conditions-

Regarding the heating conditions, the heating temperature of each heater (heating unit) was set to 40°C before printing, 40°C during printing, and 60°C after printing.

-Print medium-

Print media used were digitally printed wallpaper PROW400F obtained from LINTEC SIGN SYSTEM, INC. Each of the print media was printed with the magenta ink A in advance, and the clear ink A was printed thereon.

Printing of the magenta ink A was performed with the same printing apparatus that was used for the clear ink. The heating temperature of each heater was set to 40°C before printing, 40°C during printing, and 60°C after printing. The print medium was printed with only the magenta ink. The image printed with the magenta ink was a full solid image that had an image resolution of 600 dpi × 600 dpi and a printing rate of 100%.

The above print medium having a coating of the magenta ink printed was printed again with the clear ink using the above inkjet printer.

<Scratch resistance test>

The print medium was set in a Gakushin-Type abrasion tester (a friction tester type II) (instrument name: DYE

FRICTION FASTNESS TESTER AR-2(BC), obtained from Intec Co., Ltd.), and scratched in a go-and-return manner 100 times, 250 times, and 500 times with a friction tool (with a load of 200 g) of which contact portion was equipped with white cotton fabric (compliant with JIS L 0803, standard adjacent fabric for dyed color fastness test, shirting No. 3). The coating film after the test was visually observed and rated. Ratings 3 or higher in the test of 100 times of go-and-return are pass levels. Results are presented in Table 2.

[Evaluation criteria]

Rating 5: No scratch marks were observed on the printed surface, and no ink color transfer to the white cotton fabric was observed.
Rating 4: No scratch marks were observed on the printed surface, but a slight ink color transfer to the white cotton fabric was observed.
Rating 3: When observed from a close position, color change and gloss change were observed on the scratched portion, and a slight ink color transfer to the white cotton fabric was observed.
Rating 2: When observed from a distant position, color change and gloss change were observed on the scratched portion, or an apparent ink color transfer to the white cotton fabric was observed.
Rating 1: The background of the print medium was partially exposed.

(Examples 2 to 6)

Inkjet printing was performed in the same manner as in Example 1, except that unlike in Example 1, the clear ink A was changed to the clear inks B to F, and the scratch resistance test was performed.
Results are presented in Table 2.

(Comparative Examples 1 to 4)

Inkjet printing was performed in the same manner as in Example 1, except that unlike in Example 1, the clear ink A was changed to the clear inks G to J, and the scratch resistance test was performed.
Results are presented in Table 2.

(Comparative Example 5)

The evaluation for scratch resistance was performed in the same manner as in Example 1, except that unlike in Example 1, the print medium having no clear ink A printed and having only the magenta ink A printed was used.
In Comparative Examples 4 and 5, the ratings in the test of 100 times of go-and-return were bad (Rating 1) and thus tests of 250 times of go-and-return and 500 times of go-and-return were not performed. Results are presented in Table 2.

Table 2

| | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| Clear ink | | A | B | C | D | E | F | G | H | I | J | None |
| Scratch resistance | After 100-time test | 5 | 5 | 5 | 5 | 5 | 5 | 2 | 2 | 2 | 1 | 1 |
| | After 250-time test | 4 | 4 | 4 | 4 | 3 | 5 | 2 | 2 | 2 | - | - |
| | After 500-time test | 2 | 3 | 3 | 3 | 2 | 4 | 1 | 1 | 1 | - | - |

Comparing "Examples 1 to 6" with "Comparative Examples 1 to 4", "Examples 1 to 6" in which the clear inks having a resin particle volume average particle diameter of 50 nm or less were printed and dried films of the clear inks had glass transition temperatures (Tg) at 50 degrees Celsius or higher and at lower than 0 degrees Celsius achieved Ratings 3 or higher in the scratch resistance test of 100 times of go-and-return, and exhibited good scratch resistance.
Comparing "Example 1 and Example 5" with "Examples 2, 3, 4, and 6", the clear inks having a mass ratio MA:MB of from 98:2 through 80:20 between the mass MA of resin particles A having Tg at 50 degrees Celsius or higher and the mass MB of resin particles B having Tg at lower than 0 degrees Celsius exhibited good scratch resistance also after 250

times of go-and-return and 500 times of go-and-return.

<Reliability test>

(Example 7)

The modified device of GXe5500 used in Example 1 was additionally modified so as to include a wiping member as a constituting member of a wiping portion 2 in Table 4. During the operation of cleaning, a usual cleaning step was followed by an additional step of wiping foreign matter attached onto the nozzle-formed surface. In this additional step, a certain amount of a cleaning liquid was applied to the wiping member, and then a cleaning unit and a head were moved relatively to each other with the wiping member being pressed against the nozzle-formed surface.

The above additionally modified device was used under the same conditions as in Example 1 to continuously print a full solid image of the clear ink A for 30 seconds on the full solid image of the magenta ink A that had been printed in advance. This step was repeated 100 times. Every 20 time at which printing of the clear ink was completed, a cleaning step was performed. At the end of the $100^{th}$ printing operation, a full solid image of the clear ink was printed again. The printed image portion of the clear ink was visually observed and evaluated for the presence or absence of any streak, spot, and trace of turbulent jetting. Evaluation criteria therefor are as follows, with "A" being a pass level.

[Evaluation criteria]

A: Any streak, spot, and trace of turbulent jetting were not observed in the solid portion at all.
B: Streak, spot, and trace of turbulent jetting were observed at two or less locations in the solid portion.
C: Streak, spot, and trace of turbulent jetting were observed at three or more locations in the solid portion.

(Examples 8 to 12)

The reliability test was performed in the same manner as in Example 7, except that unlike in Example 7, the clear ink A was changed to the clear inks B to F. Results are presented in Table 3.

(Comparative Examples 6 to 11)

The reliability test was performed in the same manner as in Example 7, except that unlike in Example 7, the clear ink A was changed to the clear inks B to F, and the wiping operation was not performed in the cleaning step. Results are presented in Table 3.

(Comparative Example 12)

The reliability test was performed in the same manner as in Example 7, except that unlike in Example 7, the magenta ink A was used for printing instead of the clear ink A. Results are presented in Table 3.

(Comparative Example 13)

The reliability test was performed in the same manner as in Comparative Example 12, except that unlike in Comparative Example 12, the wiping operation was not performed in the cleaning step. Results are presented in Table 3.

Table 3

| | Examples | | | | | | Comparative Examples | | | | | | | |
|---|---|---|---|---|---|---|---|---|---|---|---|---|---|---|
| | 7 | 8 | 9 | 10 | 11 | 12 | 6 | 7 | 8 | 9 | 10 | 11 | 12 | 13 |
| Clear ink | A | B | C | D | E | F | A | B | C | D | E | F | Absent | Absent |
| Wiping member | Present | Present | Present | Present | Present | Present | Absent | Absent | Absent | Absent | Absent | Absent | Present | Absent |
| Reliability | A | A | A | A | A | A | A | C | C | C | C | C | A | B |

Comparing Examples 7 to 12 with Comparative Examples 6 to 11, it was found that the cleaning step with the wiping member could give good reliability to discharge of the clear ink.

Through comparison with Comparative Examples 12 and 13, the effect of the wiping member was higher for the clear ink than for the color ink.

<Evaluation of wiping performance>

As a head, RICOH MH5440 (obtained from Ricoh Company, Limited) was used. The MH5440 was fixed with the nozzle surface of the head facing upwards. The clear ink A was dropped by 0.1 mm on the nozzle plate, followed by being left to stand for 15 hours, to form a nozzle plate to which the clear ink adhered. According to the materials and physical properties presented in Table 4, wiping members of Examples 13 to 43 were formed.

A cleaning liquid was applied at 20 microliters/$cm^2$ to each of the wiping members presented in Table 4. The resultant wiping member was used to wipe the nozzle plate surface. Conditions for wiping were 3 N as a press force and 50 mm/s as a wiping speed.

The nozzle plate after wiping was visually observed. The wiping performance was evaluated according to the following evaluation criteria based on the number of wiping operations necessary for the adhesion ink to be removed. Results are presented in Table 4.

[Evaluation criteria]

AA: Within five times of the wiping operations, the adhesion ink on the nozzle plate was removed.

A: Within 10 times of the wiping operations, the adhesion ink on the nozzle plate was removed.

B: After 10 times of the wiping operations, the amount of the adhesion ink on the nozzle plate was 50% or less of the initial amount thereof.

C: After 10 times of the wiping operations, the amount of the adhesion ink on the nozzle plate was 50% or more of the initial amount thereof.

Table 4

| | Wiping portion No | Fibers used | | Thickness [mm] | | Porosity | | Wiping performance |
|---|---|---|---|---|---|---|---|---|
| | | 1st layer | 2nd layer | 1st layer | 2nd layer | 1st layer | 2nd layer | |
| Ex. 13 | 1 | Polyester | Rayon | 0.06 | 0.25 | 0.58 | 0.80 | B |
| Ex. 14 | 2 | Polyester | Rayon | 0.06 | 0.25 | 0.60 | 0.80 | A |
| Ex. 15 | 3 | Polyester | Rayon | 0.06 | 0.25 | 0.74 | 0.80 | A |
| Ex. 16 | 4 | Polyester | Rayon | 0.06 | 0.25 | 0.75 | 0.80 | AA |
| Ex. 17 | 5 | Polyester | Rayon | 0.06 | 0.25 | 0.80 | 0.80 | AA |
| Ex. 18 | 6 | Polyester | Rayon | 0.06 | 0.25 | 0.81 | 0.82 | A |
| Ex. 19 | 7 | Polyester | Rayon | 0.06 | 0.25 | 0.85 | 0.87 | A |
| Ex. 20 | 8 | Polyester | Rayon | 0.06 | 0.25 | 0.88 | 0.90 | B |
| Ex. 21 | 9 | Polyester | Rayon | 0.06 | 0.25 | 0.58 | 0.99 | B |
| Ex. 22 | 10 | Polyester | Rayon | 0.06 | 0.25 | 0.60 | 0.99 | A |
| Ex. 23 | 11 | Polyester | Rayon | 0.06 | 0.25 | 0.74 | 0.99 | A |
| Ex. 24 | 12 | Polyester | Rayon | 0.06 | 0.25 | 0.75 | 0.99 | AA |
| Ex. 25 | 13 | Polyester | Rayon | 0.06 | 0.25 | 0.80 | 0.99 | AA |
| Ex. 26 | 14 | Polyester | Rayon | 0.06 | 0.25 | 0.81 | 0.99 | A |

(continued)

| | Wiping portion No | Fibers used | | Thickness [mm] | | Porosity | | Wiping performance |
|---|---|---|---|---|---|---|---|---|
| | | 1st layer | 2nd layer | 1st layer | 2nd layer | 1st layer | 2nd layer | |
| Ex. 27 | 15 | Polyester | Rayon | 0.06 | 0.25 | 0.85 | 0.99 | A |
| Ex. 28 | 16 | Polyester | Rayon | 0.06 | 0.25 | 0.88 | 0.99 | B |
| Ex. 29 | 17 | Polyester | Rayon | 0.06 | 0.25 | 0.60 | 0.78 | B |
| Ex. 30 | 18 | Polyester | Rayon | 0.06 | 0.25 | 0.74 | 0.78 | B |
| Ex. 31 | 19 | Polyester | Rayon | 0.06 | 0.25 | 0.75 | 0.78 | B |
| Ex. 32 | 20 | Polyester | Rayon | 0.06 | 0.25 | 0.77 | 0.88 | AA |
| Ex. 33 | 21 | Polyester | Rayon | 0.12 | 0.50 | 0.75 | 0.80 | AA |
| Ex. 34 | 22 | Polyester | Rayon | 0.05 | 0.10 | 0.75 | 0.80 | AA |
| Ex. 35 | 23 | Polyester | Rayon+ Polyolefin (blend ratio 50:50) | 0.06 | 0.25 | 0.77 | 0.88 | AA |
| Ex. 36 | 24 | Polyester | Polyolefinbased porous body | 0.06 | 0.50 | 0.77 | 0.88 | AA |
| Ex. 37 | 25 | Polyester | Rayon (lined with PET film) | 0.06 | 0.25 | 0.77 | 0.88 | AA |
| Ex. 38 | 26 | Polyester | Rayon (bi-layered) | 0.06 | 0.2/0.12 | 0.77 | 0.82/0.95 | AA |
| Ex. 39 | 27 | Polyester | - | 0.06 | - | 0.77 | - | A |
| Ex. 40 | 28 | Polyester | Rayon | 0.06 | 0.25 | 0.85 | 0.81 | B |
| Ex. 41 | 29 | Polyester | Rayon | 0.30 | 0.10 | 0.78 | 0.92 | B |
| Ex. 42 | 30 | Polyester | Rayon | 0.12 | 0.50 | 0.85 | 0.81 | B |
| Ex. 43 | 31 | Polyester | Rayon | 0.12 | 0.05 | 0.85 | 0.81 | B |

As is clear from Examples 13 to 43, the wiping performance is different depending on the thicknesses of the first and second layers and the porosity of the wiping member.

The above-described embodiments are illustrative and do not limit the present invention. The invention is defined by the appended claims.

## Claims

**1.** A discharge apparatus (400) configured to carry out a printing method, the discharge apparatus comprising:

an ink accommodating unit (411) that accommodates a clear ink, the clear ink including water and resin particles;
a discharge head (434; 4a; 4b) including a nozzle (4n) configured to discharge the clear ink to a print target (29);
a heating unit (41) configured to heat the print target (29); and
a wiping member (320) configured to wipe a nozzle-formed surface (9) of the discharge head (434; 4a; 4b) including the nozzle (4n),
**characterized in that** the resin particles have a volume average particle diameter of 50 nm or less, the resin particles include resin particles A and resin particles B, and the resin particles A have a glass transition temperature of 50 degrees Celsius or higher and the resin particles B have a glass transition temperature of lower than 0 degrees Celsius, such that a dried film of the clear ink has glass transition temperatures at 50 degrees Celsius or higher and at lower than 0 degrees Celsius.

**2.** The discharge apparatus (400) according to claim 1, wherein a mass ratio MA:MB between mass MA of the resin particles A and mass MB of the resin particles B is from 98:2 through 80:20.

**3.** The discharge apparatus (400) according to claim 1 or 2, wherein a proportion of the resin particles in the clear ink is 8% by mass or greater.

**4.** The discharge apparatus (400) according to claim 1, 2 or 3, wherein the resin particles A comprise polyurethane resin particles.

**5.** The discharge apparatus (400) according to any one of claims 1 to 4, wherein a proportion of the resin particles in the clear ink is 10% by mass or greater.

**6.** The discharge apparatus (400) according to any one of claims 1 to 5, wherein the clear ink includes a surfactant, and a proportion of the surfactant in the clear ink is 2% by mass or less.

**7.** The discharge apparatus (400) according to any one of claims 1 to 6, wherein the wiping member (320) comprises:

two or more layers (610; 620) including a first layer (610) that comes into contact with the nozzle-formed surface (9),
wherein t1<t2 is established, where t1 denotes a thickness of the first layer (610), and t2 denotes a total thickness of the two or more layers (610; 620) excluding the first layer (610), and
a porosity of the first layer (610) is less than a porosity of at least one layer of the two or more layers (610; 620) excluding the first layer (610).

**8.** The discharge apparatus (400) according to claim 7, wherein the porosity of the first layer (610) is 0.60 or more but 0.85 or less.

**9.** The discharge apparatus (400) according to claim 7 or 8, wherein the porosity of the first layer (610) is 0.75 or more but 0.80 or less.

**10.** The discharge apparatus (400) according to any one of claims 7 to 9, wherein the first layer (610) is made of non-woven fabric.

**11.** The discharge apparatus (400) according to any one of claims 7 to 10, wherein the porosity of said at least one layer of the two or more layers (610; 620) excluding the first layer (610) is 0.80 or more but 0.99 or less.

**12.** The discharge apparatus (400) according to any one of claims 7 to 11, wherein a thickness of the wiping member (320) is 0.1 mm or more but 3 mm or less.

**13.** A printing method, comprising:

discharging a clear ink to a print target (29) from a nozzle (4n) of a discharge head (434; 4a; 4b), to form a print layer, the clear ink including water and resin particles;
heating the print target (29) having the print layer thereon; and
wiping a nozzle-formed surface (9) of the discharge head (434; 4a; 4b) including the nozzle (4n), with a wiping member (320),
**characterized in that** the resin particles have a volume average particle diameter of 50 nm or less, the resin particles include resin particles A and resin particles B, and the resin particles A have a glass transition temperature of 50 degrees Celsius or higher and the resin particles B have a glass transition temperature of lower than 0 degrees Celsius, such that a dried film of the clear ink has glass transition temperatures at 50 degrees Celsius or higher and at lower than 0 degrees Celsius.

**14.** The printing method according to claim 13, wherein the wiping includes moving the discharge head (434; 4a; 4b) and the wiping member (320) relatively to each other.

**15.** The printing method according to claim 13 or 14, wherein the wiping member includes:

two or more layers including a first layer that comes into contact with the nozzle-formed surface,
wherein t1<t2 is established, where t1 denotes a thickness of the first layer, and t2 denotes a total thicknesses of the two or more layers excluding the first layer, and
a porosity of the first layer is less than a porosity of at least one layer of the two or more layers excluding the first

layer.

16. The printing method according to any one of claims 13 to 15, wherein the print target is a non-permeating substrate.

## Patentansprüche

1. Ausstoßgerät (400), das zum Ausführen eines Druckverfahrens konfiguriert ist, wobei das Ausstoßgerät Folgendes umfasst:

   eine Tintenaufnahmeeinheit (411), die eine klare Tinte aufnimmt, wobei die klare Tinte Wasser und Harzpartikel einschließt;
   einen Ausstoßkopf (434; 4a; 4b), der eine Düse (4n) einschließt, die so konfiguriert ist, dass sie die klare Tinte auf ein Druckziel (29) ausstößt;
   eine Heizeinheit (41), die so konfiguriert ist, dass sie das Druckziel (29) erhitzt; und
   ein Wischelement (320), das so konfiguriert ist, dass es eine düsenförmige Oberfläche (9) des Ausstoßkopfes (434; 4a; 4b), der die Düse (4n) einschließt, abwischt,
   **dadurch gekennzeichnet, dass** die Harzpartikel einen volumenmittleren Partikeldurchmesser von 50 nm oder weniger aufweisen, die Harzpartikel Harzpartikel A und Harzpartikel B einschließen, und die Harzpartikel A eine Glasübergangstemperatur von 50 Grad Celsius oder höher aufweisen und die Harzpartikel B eine Glasübergangstemperatur von weniger als 0 Grad Celsius aufweisen, sodass ein getrockneter Film der klaren Tinte Glasübergangstemperaturen bei 50 Grad Celsius oder höher und bei weniger als 0 Grad Celsius aufweist.

2. Ausstoßgerät (400) nach Anspruch 1, wobei ein Gewichtsverhältnis MA:MB zwischen Gewicht MA der Harzpartikel A und Gewicht MB der Harzpartikel B zwischen 98:2 und 80:20 liegt.

3. Ausstoßgerät (400) nach Anspruch 1 oder 2, wobei ein Anteil der Harzpartikel in der klaren Tinte 8 Gew.-% oder mehr beträgt.

4. Ausstoßgerät (400) nach Anspruch 1, 2 oder 3, wobei die Harzpartikel A Polyurethanharzpartikel umfassen.

5. Ausstoßgerät (400) nach einem der Ansprüche 1 bis 4, wobei ein Anteil der Harzpartikel in der klaren Tinte 10 Gew.-% oder mehr beträgt.

6. Ausstoßgerät (400) nach einem der Ansprüche 1 bis 5, wobei die klare Tinte ein Tensid einschließt, und ein Anteil des Tensids in der klaren Tinte 2 Gew.-% oder weniger beträgt.

7. Ausstoßgerät (400) nach einem der Ansprüche 1 bis 6, wobei das Wischelement (320) Folgendes umfasst:

   zwei oder mehr Schichten (610; 620), die eine erste Schicht (610) einschließen, die mit der düsenförmigen Oberfläche (9) in Kontakt kommt,
   wobei t1 < t2 gilt, worin t1 eine Dicke der ersten Schicht (610) bezeichnet, und t2 eine Gesamtdicke der zwei oder mehr Schichten (610; 620), welche die erste Schicht (610) ausschließen, bezeichnet, und
   eine Porosität der ersten Schicht (610) geringer ist als eine Porosität von mindestens einer Schicht der zwei oder mehr Schichten (610; 620), welche die erste Schicht (610) ausschließen.

8. Ausstoßgerät (400) nach Anspruch 7, wobei die Porosität der ersten Schicht (610) 0,60 oder mehr, aber 0,85 oder weniger beträgt.

9. Ausstoßgerät (400) nach Anspruch 7 oder 8, wobei die Porosität der ersten Schicht (610) 0,75 oder mehr, aber 0,80 oder weniger beträgt.

10. Ausstoßgerät (400) nach einem der Ansprüche 7 bis 9, wobei die erste Schicht (610) aus Vliesstoff besteht.

11. Ausstoßgerät (400) nach einem der Ansprüche 7 bis 10, wobei die Porosität der mindestens einen Schicht der zwei oder mehr Schichten (610; 620), welche die erste Schicht (610) ausschließen, 0,80 oder mehr, aber 0,99 oder weniger beträgt.

**12.** Ausstoßgerät (400) nach einem der Ansprüche 7 bis 11, wobei eine Dicke des Wischelements (320) 0,1 mm oder mehr, aber 3 mm oder weniger beträgt.

**13.** Druckverfahren, Folgendes umfassend:

Ausstoßen einer klaren Tinte auf ein Druckziel (29) aus einer Düse (4n) eines Ausstoßkopfes (434; 4a; 4b), um eine Druckschicht zu bilden, wobei die klare Tinte Wasser und Harzpartikel einschließt;
Erhitzen des Druckziels (29), das die Druckschicht darauf aufweist; und
Abwischen einer düsenförmigen Oberfläche (9) des Ausstoßkopfes (434; 4a; 4b), der die Düse (4n) einschließt, mit einem Wischelement (320),
**dadurch gekennzeichnet, dass** die Harzpartikel einen volumenmittleren Partikeldurchmesser von 50 nm oder weniger aufweisen, die Harzpartikel Harzpartikel A und Harzpartikel B einschließen, und die Harzpartikel A eine Glasübergangstemperatur von 50 Grad Celsius oder höher aufweisen und die Harzpartikel B eine Glasübergangstemperatur von weniger als 0 Grad Celsius aufweisen, sodass ein getrockneter Film der klaren Tinte Glasübergangstemperaturen bei 50 Grad Celsius oder höher und bei weniger als 0 Grad Celsius aufweist.

**14.** Druckverfahren nach Anspruch 13, wobei das Wischen das Bewegen des Ausstoßkopfes (434; 4a; 4b) und des Wischelements (320) in Bezug zueinander einschließt.

**15.** Druckverfahren nach Anspruch 13 oder 14, wobei das Wischelement Folgendes einschließt:

zwei oder mehr Schichten, einschließlich einer ersten Schicht, die in Kontakt mit der düsenförmigen Oberfläche kommt,
wobei t1 < t2 gilt, worin t1 eine Dicke der ersten Schicht bezeichnet, und t2 eine Gesamtdicken der zwei oder mehr Schichten, welche die erste Schicht ausschließen, bezeichnet, und
eine Porosität der ersten Schicht geringer ist als eine Porosität von mindestens einer Schicht der zwei oder mehr Schichten, welche die erste Schicht ausschließen.

**16.** Druckverfahren nach einem der Ansprüche 13 bis 15, wobei das Druckziel ein nicht durchlässiges Substrat ist.

## Revendications

**1.** Appareil de décharge (400) configuré pour mettre en œuvre un procédé d'impression, l'appareil de décharge comprenant :

une unité de logement d'encre (411) qui loge une encre claire, l'encre claire incluant de l'eau et des particules de résine ;
une tête de décharge (434; 4a ; 4b) incluant une buse (4n) configurée pour décharger l'encre claire vers une cible d'impression (29) ;
une unité chauffante (41) configurée pour chauffer la cible d'impression (29) ; et
un élément d'essuyage (320) configuré pour essuyer une surface en forme de buse (9) de la tête de décharge (434 ; 4a ; 4b) incluant la buse (4n),
**caractérisé en ce que** les particules de résine présentent un diamètre de particule moyen en volume de 50 nm ou moins, les particules de résine incluent des particules de résine A et des particules de résine B, et les particules de résine A présentent une température de transition vitreuse de 50 degrés Celsius ou plus et les particules de résine B présentent une température de transition vitreuse inférieure à 0 degré Celsius, de telle sorte qu'un film séché de l'encre claire présente des températures de transition vitreuse à 50 degrés Celsius ou plus et à moins de 0 degré Celsius.

**2.** Appareil de décharge (400) selon la revendication 1, dans lequel un rapport de masse MA : MB entre une masse MA des particules de résine A et une masse MB des particules de résine B est de 98 : 2 à 80 : 20.

**3.** Appareil de décharge (400) selon la revendication 1 ou 2, dans lequel une proportion des particules de résine dans l'encre claire est de 8 % en masse ou plus.

**4.** Appareil de décharge (400) selon la revendication 1, 2 ou 3, dans lequel les particules de résine A comprennent des particules de résine de polyuréthane.

**5.** Appareil de décharge (400) selon l'une quelconque des revendications 1 à 4, dans lequel une proportion des particules de résine dans l'encre claire est de 10 % en masse ou plus.

**6.** Appareil de décharge (400) selon l'une quelconque des revendications 1 à 5, dans lequel l'encre claire inclut un tensioactif, et une proportion du tensioactif dans l'encre claire est de 2 % en masse ou moins.

**7.** Appareil de décharge (400) selon l'une quelconque des revendications 1 à 6, dans lequel l'élément d'essuyage (320) comprend :

deux couches (610 ; 620) ou plus incluant une première couche (610) qui vient en contact avec la surface en forme de buse (9),
dans lequel t1 < t2 est établie, où t1 désigne une épaisseur de la première couche (610), et t2 désigne une épaisseur totale des deux couches (610 ; 620) ou plus excluant la première couche (610), et
une porosité de la première couche (610) est inférieure à une porosité d'au moins une couche des deux couches (610 ; 620) ou plus excluant la première couche (610).

**8.** Appareil de décharge (400) selon la revendication 7, dans lequel la porosité de la première couche (610) est de 0,60 ou plus mais de 0,85 ou moins.

**9.** Appareil de décharge (400) selon la revendication 7 ou 8, dans lequel la porosité de la première couche (610) est de 0,75 ou plus mais de 0,80 ou moins.

**10.** Appareil de décharge (400) selon l'une quelconque des revendications 7 à 9, dans lequel la première couche (610) est constituée de tissu non tissé.

**11.** Appareil de décharge (400) selon l'une quelconque des revendications 7 à 10, dans lequel la porosité de ladite au moins une couche des deux couches (610 ; 620) ou plus excluant la première couche (610) est de 0,80 ou plus mais de 0,99 ou moins.

**12.** Appareil de décharge (400) selon l'une quelconque des revendications 7 à 11, dans lequel une épaisseur de l'élément d'essuyage (320) est de 0,1 mm ou plus mais de 3 mm ou moins.

**13.** Procédé d'impression, comprenant :

la décharge d'une encre claire vers une cible d'impression (29) à partir d'une buse (4n) d'une tête de décharge (434 ; 4a ; 4b), pour former une couche d'impression, l'encre claire incluant de l'eau et des particules de résine ;
le chauffage de la cible d'impression (29) présentant la couche d'impression sur celle-ci ; et
l'essuyage d'une surface en forme de buse (9) de la tête de décharge (434 ; 4a ; 4b) incluant la buse (4n), avec un élément d'essuyage (320),
**caractérisé en ce que** les particules de résine présentent un diamètre de particule moyen en volume de 50 nm ou moins, les particules de résine incluent des particules de résine A et des particules de résine B, et les particules de résine A présentent une température de transition vitreuse de 50 degrés Celsius ou plus et les particules de résine B présentent une température de transition vitreuse inférieure à 0 degré Celsius, de telle sorte qu'un film séché de l'encre claire présente une température de transition vitreuse à 50 degrés Celsius ou plus et à moins de 0 degré Celsius.

**14.** Procédé d'impression selon la revendication 13, dans lequel l'essuyage inclut le déplacement de la tête de décharge (434; 4a; 4b) et de l'élément d'essuyage (320) l'un par rapport à l'autre.

**15.** Procédé d'impression selon la revendication 13 ou 14, dans lequel l'élément d'essuyage inclut :

deux couches ou plus incluant une première couche qui vient en contact avec la surface en forme de buse,
dans lequel t1 < t2 est établie, où t1 désigne une épaisseur de la première couche, et t2 désigne une épaisseurs totales des deux couches ou plus excluant la première couche, et
une porosité de la première couche est inférieure à une porosité d'au moins une couche des deux couches ou plus excluant la première couche.

**16.** Procédé d'impression selon l'une quelconque des revendications 13 à 15, dans lequel la cible d'impression est un

substrat imperméable.

FIG. 1

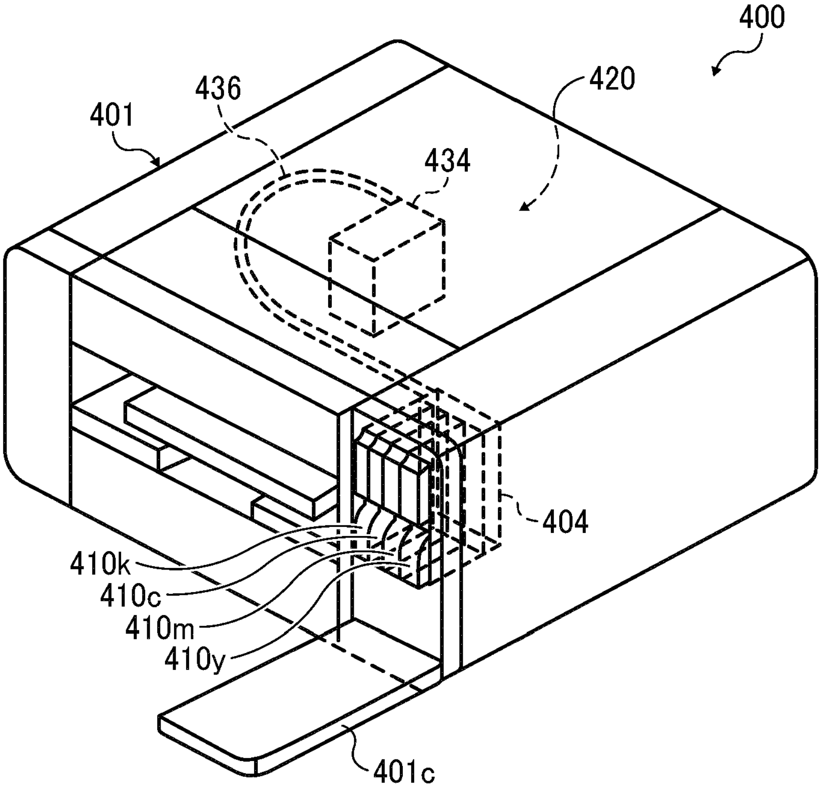
400
401
436
420
434
404
410k
410c
410m
410y
401c

FIG. 2

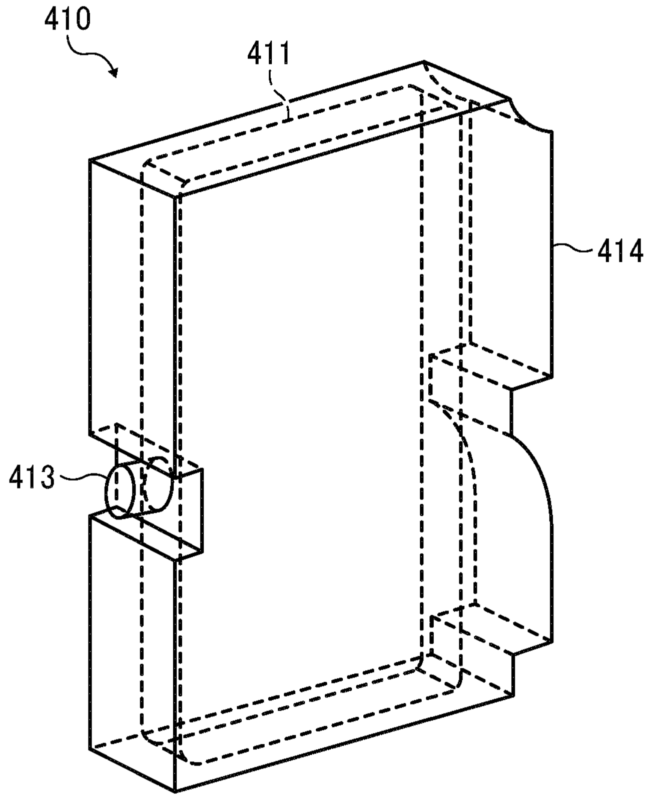
410
411
414
413

FIG. 3

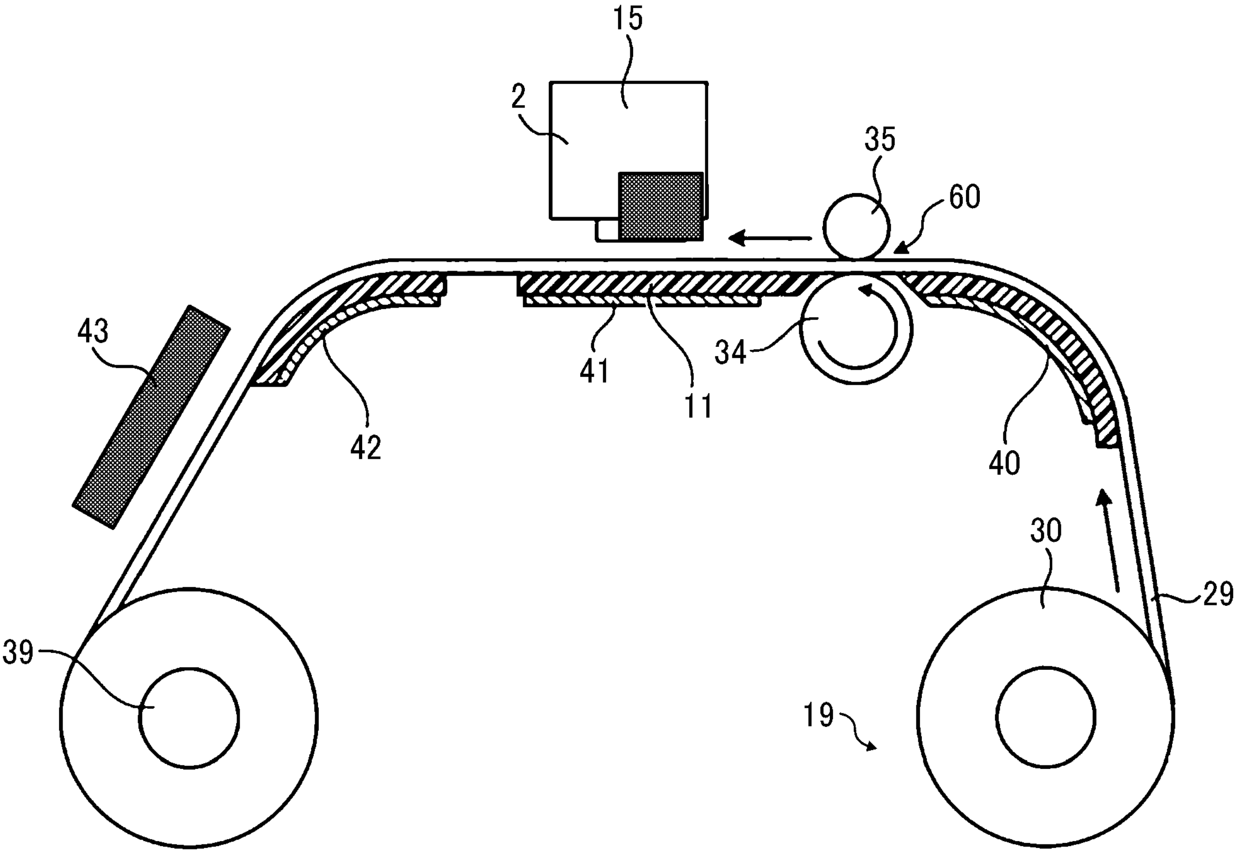

FIG. 4

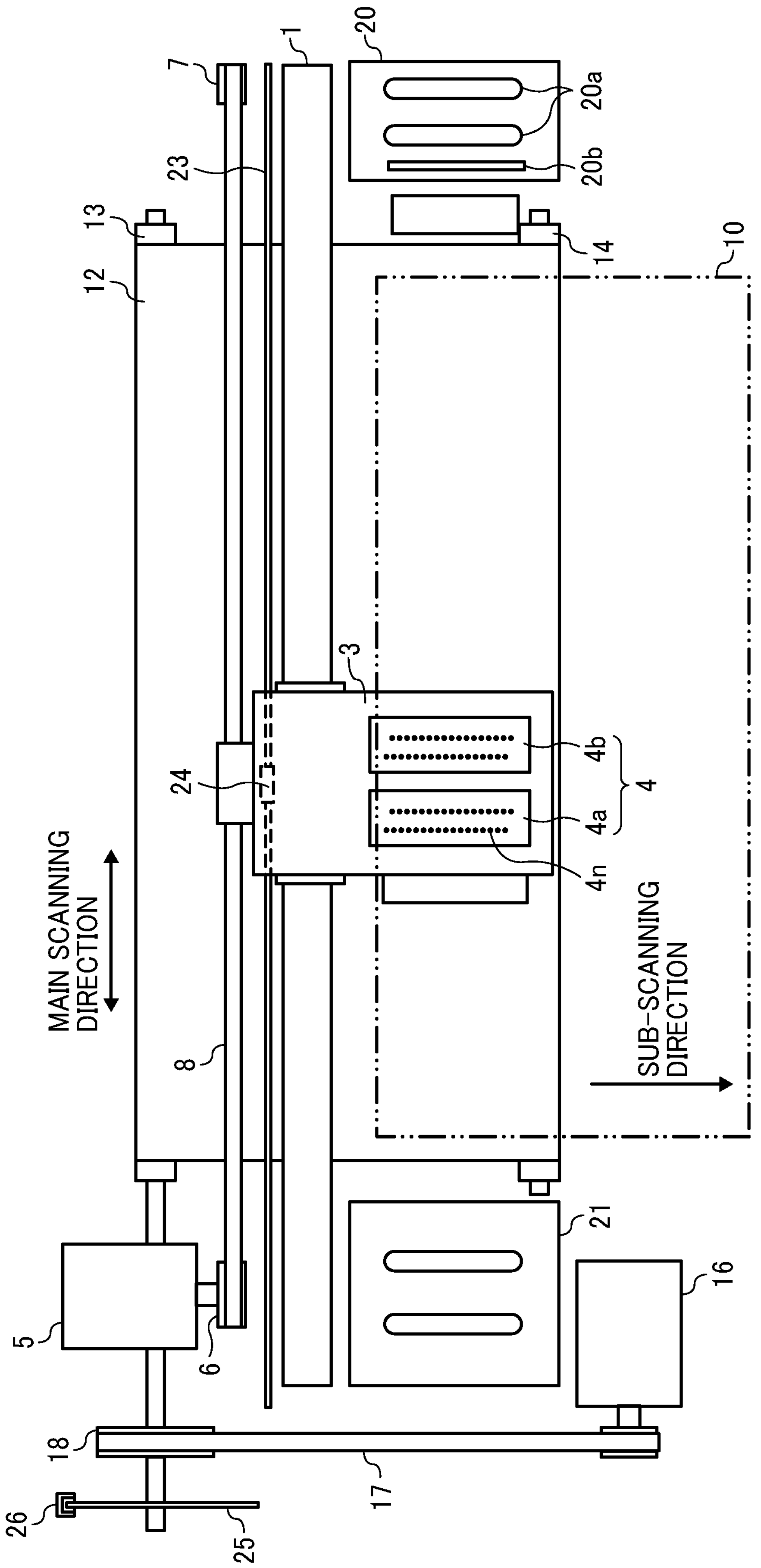
MAIN SCANNING DIRECTION
SUB-SCANNING DIRECTION
1
3
4
4a
4b
4n
5
6
7
8
10
12
13
14
16
17
18
20
20a
20b
21
23
24
25
26

FIG. 5

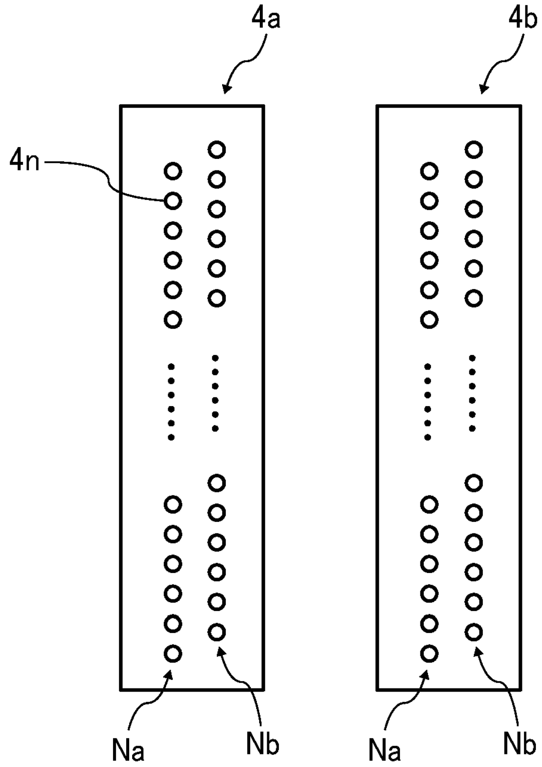


FIG. 6

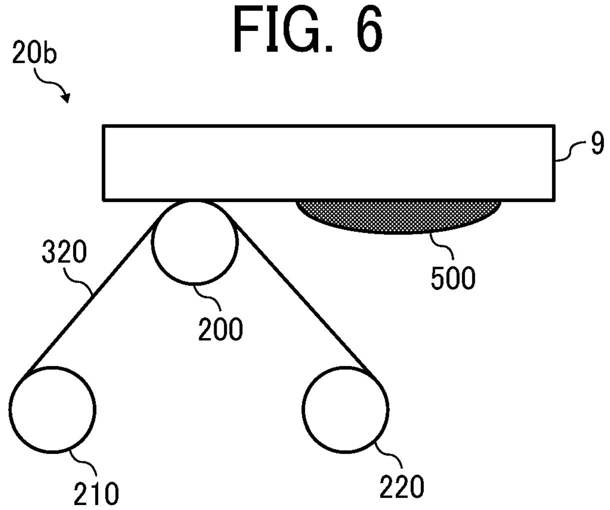


FIG. 7

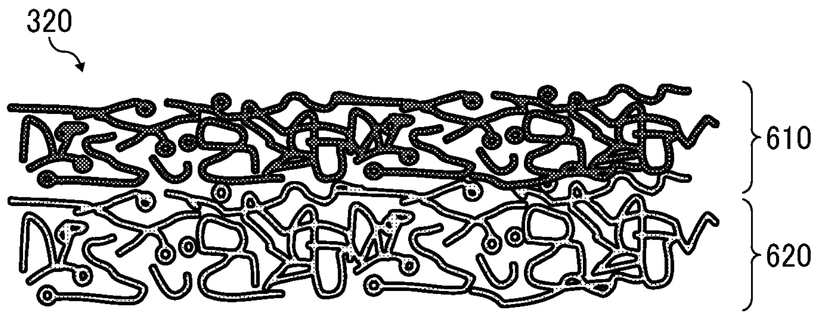

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015 A
- JP 147919 A
- JP 2013212644 A
- JP 2002210940 A
- JP 2015183112 A
- JP 2009160867 A